# EUROPEAN PATENT APPLICATION

(11) **EP 4 615 025 A1**
(43) Date of publication of application: **10.09.2025**
(21) Application number: 23890682.0
(22) Date of filing: 09.11.2023
(51) Int. Cl.: H04W 12/03

(54) **COMMUNICATION METHOD AND COMMUNICATION APPARATUS**

(30) Priority: 16.11.2022 CN 202211436707
(71) Applicant: Huawei Technologies Co., Ltd., Shenzhen, Guangdong 518129 (CN)
(72) Inventor: LI, He, Shenzhen, Guangdong 518129 (CN); WU, Rong, Shenzhen, Guangdong 518129 (CN)
(74) Representative: Goddar, Heinz J.
(86) International application number: PCT/CN2023/130723
(87) International publication number: WO 2024/104246

(57) **Abstract**

This application provides a communication method and a communication apparatus, and may be applied to an AKMA roaming scenario. The method may include: A visited authentication and key management for applications anchor function network element receives an application key get request message from a visited application function network element. The application key get request message requests a root key used to protect communication data between the visited application function network element and a terminal device. The visited authentication and key management for applications anchor function network element obtains a verification result of a subscriber permanent identifier of the terminal device based on the application key get request message. When verification on the subscriber permanent identifier succeeds, the visited authentication and key management for applications anchor function network element sends the root key to the visited application function network element. According to the foregoing solution, a secure connection between the visited application function network element and the terminal device can be established, to improve communication security.

## Description

This application claims priority to Chinese Patent Application No. 202211436707.8, filed with the China National Intellectual Property Administration on November 16, 2022, and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

In a key architecture of authentication and key management for applications (authentication and key management for applications, AKMA), user equipment (user equipment, UE) and a network side generate respective keys. On the network side, after a primary authentication procedure for the UE is completed, an authentication server function (authentication server function, AUSF) may generate an AKMA key K_{AKMA} based on an AUSF key K_{AUSF} generated in the primary authentication procedure.

In addition, in a roaming scenario, the user equipment (user equipment, UE) may initiate a registration procedure to a visited network to establish a network connection. In this case, the UE may initiate a service request to a visited application function (visited application function, vAF) network element. How to protect communication security between the UE and the vAF is a problem to be considered currently.

### SUMMARY

This application provides a communication method and a communication apparatus, to protect communication security between a visited application function network element and a terminal device.

According to a first aspect, a communication method is provided. The method may be applied to a visited authentication and key management for applications anchor function network element or a component of the visited authentication and key management for applications anchor function network element. For simplicity, an example in which the visited authentication and key management for applications anchor function network element performs the method is used herein for description.

The method includes: The visited authentication and key management for applications anchor function network element receives an application key get request message from a visited application function network element, where the application key get request message is used to request to obtain a root key, and the root key is used to protect communication data between the visited application function network element and a terminal device. The visited authentication and key management for applications anchor function network element obtains a verification result of a subscriber permanent identifier of the terminal device. When verification on the subscriber permanent identifier succeeds, the visited authentication and key management for applications anchor function network element sends the root key to the visited application function network element.

Based on the foregoing solution, the visited authentication and key management for applications anchor function network element sends the root key to the visited application function network element when determining that the verification on the subscriber permanent identifier succeeds (that is, determining that the subscriber permanent identifier is an authentic identifier of the terminal device), so that the visited application function network element can securely communicate with the terminal device.

In the foregoing method, the visited authentication and key management for applications anchor function network element may determine an authentic identifier of the terminal device that is to securely communicate with the visited application function network element, to avoid a service failure of the terminal device caused by an incorrect identifier of the terminal device. Service performance of the terminal device and security performance of communication with the visited application function network element can be improved.

With reference to the first aspect, in some implementations of the first aspect, that the visited authentication and key management for applications anchor function network element obtains a verification result of a subscriber permanent identifier of the terminal device includes: When the visited authentication and key management for applications anchor function network element receives the subscriber permanent identifier from a visited access and mobility management function network element, the visited authentication and key management for applications anchor function network element determines that the verification on the subscriber permanent identifier succeeds.

Based on the foregoing solution, the visited authentication and key management for applications anchor function network element may determine whether the verification on the subscriber permanent identifier of the terminal device succeeds. In this solution, the visited access and mobility management function network element implicitly indicates to the visited authentication and key management for applications anchor function network element whether the verification on the subscriber permanent identifier of the terminal device succeeds. For example, after the verification on the subscriber permanent identifier succeeds, the visited access and mobility management function network element sends the subscriber permanent identifier on which the verification succeeds to the visited authentication and key management for applications anchor function network element. When determining that the subscriber permanent identifier is received from the visited access and mobility management function network element, the visited authentication and key management for applications anchor function network element determines that the verification on the subscriber permanent identifier succeeds.

With reference to the first aspect, in some implementations of the first aspect, the application key get request message includes a key identifier, and the subscriber permanent identifier is associated with the key identifier.

With reference to the first aspect, in some implementations of the first aspect, that the visited authentication and key management for applications anchor function network element obtains a verification result of a subscriber permanent identifier of the terminal device includes: The visited authentication and key management for applications anchor function network element sends a verification request message to a visited access and mobility management function network element, where the verification request message includes the subscriber permanent identifier, and the verification request message is used to request to verify the subscriber permanent identifier. The visited authentication and key management for applications anchor function network element receives a verification response message from the visited access and mobility management function network element, where the verification response message includes the verification result of the subscriber permanent identifier.

Based on the foregoing solution, the visited authentication and key management for applications anchor function network element may determine whether the verification on the subscriber permanent identifier of the terminal device succeeds. In this solution, the visited access and mobility management function network element explicitly indicates to the visited authentication and key management for applications anchor function network element whether the verification on the subscriber permanent identifier of the terminal device succeeds. For example, the visited authentication and key management for applications anchor function network element sends the subscriber permanent identifier to the visited access and mobility management function network element, to request the visited access and mobility management function network element to perform verification on the subscriber permanent identifier. The visited authentication and key management for applications anchor function network element determines, based on the verification result fed back by the visited access and mobility management function network element, whether the verification on the subscriber permanent identifier succeeds.

With reference to the first aspect, in some implementations of the first aspect, the method further includes: The visited authentication and key management for applications anchor function network element obtains the subscriber permanent identifier of the terminal device.

With reference to the first aspect, in some implementations of the first aspect, the application key get request message includes a key identifier, and that the visited authentication and key management for applications anchor function network element obtains the subscriber permanent identifier of the terminal device includes: The visited authentication and key management for applications anchor function network element determines the subscriber permanent identifier corresponding to the key identifier in a local storage.

With reference to the first aspect, in some implementations of the first aspect, before the visited authentication and key management for applications anchor function network element obtains the subscriber permanent identifier of the terminal device, the method further includes: The visited authentication and key management for applications anchor function network element receives an association relationship between the key identifier and the subscriber permanent identifier from an authentication server function network element. The visited authentication and key management for applications anchor function network element stores the association relationship between the key identifier and the subscriber permanent identifier.

Based on the foregoing solution, the visited authentication and key management for applications anchor function network element obtains and stores the subscriber permanent identifier and the corresponding key identifier from the authentication server function network element in advance. After receiving the application key get request message from the visited application function network element, the visited authentication and key management for applications anchor function network element determines the subscriber permanent identifier based on the key identifier carried in the application key get request message and the pre-obtained correspondence between the subscriber permanent identifier and the key identifier, for verification on the subscriber permanent identifier.

With reference to the first aspect, in some implementations of the first aspect, the application key get request message includes a key identifier, and that the visited authentication and key management for applications anchor function network element obtains the subscriber permanent identifier of the terminal device includes: The visited authentication and key management for applications anchor function network element sends an application key get request message to an authentication server function network element, where the application key get request message includes the key identifier. The visited authentication and key management for applications anchor function network element receives an application key get response message from the authentication server function network element, where the application key get response message includes the subscriber permanent identifier.

Based on the foregoing solution, the visited authentication and key management for applications anchor function network element may obtain the subscriber permanent identifier from the authentication server function network element, for verification on the subscriber permanent identifier.

With reference to the first aspect, in some implementations of the first aspect, the method further includes: The visited authentication and key management for applications anchor function network element receives an authentication and key management for applications anchor key from the visited access and mobility management function network element. The visited authentication and key management for applications anchor function network element generates the root key based on the authentication and key management for applications anchor key.

Based on the foregoing solution, the visited authentication and key management for applications anchor function network element may generate the root key based on the authentication and key management for applications anchor key from the visited access and mobility management function network element. In an example, the visited access and mobility management function network element receives the authentication and key management for applications anchor key and the subscriber permanent identifier from the authentication server function network element. When the verification on the subscriber permanent identifier succeeds, the visited access and mobility management function network element sends the authentication and key management for applications anchor key to the visited authentication and key management for applications anchor function network element.

With reference to the first aspect, in some implementations of the first aspect, the method further includes: When the verification on the subscriber permanent identifier fails, the visited authentication and key management for applications anchor function network element rejects the application key get request message.

With reference to the first aspect, in some implementations of the first aspect, the application key get request message further includes a first message authentication code and a computing parameter used to generate the first message authentication code, the first message authentication code is used for verification on a first key, and the first key is any one of the following: the root key, the authentication and key management for applications anchor key used to generate the root key, and a key derived based on the root key or the authentication and key management for applications anchor key. The method further includes: The visited authentication and key management for applications anchor function network element generates a second message authentication code based on the first key and the computing parameter; and the visited authentication and key management for applications anchor function network element determines whether the first message authentication code is the same as the second message authentication code. That the visited authentication and key management for applications anchor function network element sends the root key to the visited application function network element includes: When the first message authentication code is the same as the second message authentication code, the visited authentication and key management for applications anchor function network element sends the root key to the visited application function network element.

Based on the foregoing solution, the visited authentication and key management for applications anchor function network element may verify the first key by using a message authentication code, to ensure that the first key used by the terminal device is the same as the first key obtained by the visited authentication and key management for applications anchor function network element, to reduce service failures of the terminal device and improve service performance of the terminal device.

According to a second aspect, a communication method is provided. The method may be applied to a visited access and mobility management function network element, or a component of the visited access and mobility management function network element. For simplicity, an example in which the visited access and mobility management function network element performs the method is used herein for description.

The method includes: The visited access and mobility management function network element receives a subscriber permanent identifier from an authentication server function network element. When determining that a terminal device corresponding to the subscriber permanent identifier is located in an operator network in which the visited access and mobility management function network element is located, the visited access and mobility management function network element indicates to the visited access and mobility management function network element that verification on the subscriber permanent identifier succeeds.

Based on the foregoing solution, the visited access and mobility management function network element indicates the subscriber permanent identifier on which verification succeeds to the visited access and mobility management function network element, so that the visited authentication and key management for applications anchor function network element determines an authentic identifier of the terminal device in communication, to avoid a service failure of the terminal device caused by an incorrect identifier of the terminal device. Service performance of the terminal device and security performance of communication with the visited application function network element can be improved.

With reference to the second aspect, in some implementations of the second aspect, that the visited access and mobility management function network element indicates to the visited access and mobility management function network element that verification on the subscriber permanent identifier succeeds includes: The visited access and mobility management function network element sends the subscriber permanent identifier to the visited authentication and key management for applications anchor function network element.

Based on the foregoing solution, the visited access and mobility management function network element implicitly indicates to the visited authentication and key management for applications anchor function network element whether the verification on the subscriber permanent identifier of the terminal device succeeds. For example, after the verification on the subscriber permanent identifier succeeds, the visited access and mobility management function network element sends the subscriber permanent identifier on which the verification succeeds to the visited authentication and key management for applications anchor function network element.

With reference to the second aspect, in some implementations of the second aspect, that the visited access and mobility management function network element indicates to the visited access and mobility management function network element that verification on the subscriber permanent identifier succeeds includes: The visited access and mobility management function network element receives a verification request message from the visited authentication and key management for applications anchor function network element, where the verification request message includes the subscriber permanent identifier, and the verification request message is used to request to verify the subscriber permanent identifier. The visited access and mobility management function network element determines that the subscriber permanent identifier is locally stored. The visited access and mobility management function network element sends a verification response message to the visited authentication and key management for applications anchor function network element, where the verification response message includes a verification result, and the verification result indicates that the verification on the subscriber permanent identifier succeeds.

Based on the foregoing solution, the visited access and mobility management function network element explicitly indicates to the visited authentication and key management for applications anchor function network element whether the verification on the subscriber permanent identifier of the terminal device succeeds. For example, if a subscriber permanent identifier on which verification succeeds and that is stored in the visited access and mobility management function network element includes the subscriber permanent identifier that the visited authentication and key management for applications anchor function network element requests to verify, the visited access and mobility management function network element indicates to the visited authentication and key management for applications anchor function network element that the verification on the subscriber permanent identifier succeeds.

With reference to the second aspect, in some implementations of the second aspect, the method further includes: The visited access and mobility management function network element receives an authentication and key management for applications anchor key from the authentication server function network element. The visited access and mobility management function network element sends the authentication and key management for applications anchor key to the visited authentication and key management for applications anchor function network element.

Based on the foregoing solution, if the verification on the subscriber permanent identifier succeeds, the visited access and mobility management function network element may send the received authentication and key management for applications anchor key corresponding to the subscriber permanent identifier to the visited authentication and key management for applications anchor function network element, so that the visited authentication and key management for applications anchor function network element generates a root key based on the authentication and key management for applications anchor key, and the visited authentication and key management for applications anchor function network element does not need to obtain the root key by using another procedure. This can save signaling, and improve efficiency.

According to a third aspect, a communication method is provided. The method includes: A visited access and mobility management function network element receives a subscriber permanent identifier from an authentication server function network element. When determining that a terminal device corresponding to the subscriber permanent identifier is located in an operator network in which the visited access and mobility management function network element is located, the visited access and mobility management function network element sends a verification result to a visited authentication and key management for applications anchor function network element, where the verification result indicates that verification on the subscriber permanent identifier succeeds. The visited authentication and key management for applications anchor function network element receives the verification result from the visited access and mobility management function network element. The visited authentication and key management for applications anchor function network element receives an application key get request message from a visited application function network element, where the application key get request message is used to request to obtain a root key, and the root key is used to protect communication data between the visited application function network element and the terminal device. The visited authentication and key management for applications anchor function network element sends the root key to the visited application function network element based on the verification result of the subscriber permanent identifier.

With reference to the third aspect, in some implementations of the third aspect, before the visited authentication and key management for applications anchor function network element receives the verification result from the visited access and mobility management function network element, the method further includes: The visited authentication and key management for applications anchor function network element sends a verification request message to the visited access and mobility management function network element, where the verification request message includes the subscriber permanent identifier.

With reference to the third aspect, in some implementations of the third aspect, the method further includes: The visited authentication and key management for applications anchor function network element obtains the subscriber permanent identifier of the terminal device.

With reference to the third aspect, in some implementations of the third aspect, the application key get request message includes a key identifier, and that the visited authentication and key management for applications anchor function network element obtains the subscriber permanent identifier of the terminal device includes: The visited authentication and key management for applications anchor function network element determines the subscriber permanent identifier corresponding to the key identifier in a local storage.

With reference to the third aspect, in some implementations of the third aspect, before the visited authentication and key management for applications anchor function network element obtains the subscriber permanent identifier of the terminal device, the method further includes: The visited authentication and key management for applications anchor function network element receives an association relationship between the key identifier and the subscriber permanent identifier from the authentication server function network element. The visited authentication and key management for applications anchor function network element stores the association relationship between the key identifier and the subscriber permanent identifier.

With reference to the third aspect, in some implementations of the third aspect, the application key get request message includes a key identifier, and that the visited authentication and key management for applications anchor function network element obtains the subscriber permanent identifier of the terminal device includes: The visited authentication and key management for applications anchor function network element sends an application key get request message to the authentication server function network element, where the application key get request message includes the key identifier. The visited authentication and key management for applications anchor function network element receives an application key get response message from the authentication server function network element, where the application key get response message includes the subscriber permanent identifier.

With reference to the third aspect, in some implementations of the third aspect, the verification result is the subscriber permanent identifier.

According to a fourth aspect, a communication apparatus is provided. The apparatus includes: a transceiver module, configured to receive an application key get request message from a visited application function network element, where the application key get request message is used to request to obtain a root key, and the root key is used to protect communication data between the visited application function network element and a terminal device; and a processing module, configured to obtain a verification result of a subscriber permanent identifier of the terminal device. The transceiver module is further configured to: when the verification result indicates that verification on the subscriber permanent identifier succeeds, send the root key to the visited application function network element.

With reference to the fourth aspect, the processing module is specifically configured to: when the visited authentication and key management for applications anchor function network element receives the subscriber permanent identifier from a visited access and mobility management function network element, determine that the verification on the subscriber permanent identifier succeeds.

With reference to the fourth aspect, in some implementations of the fourth aspect, the application key get request message includes a key identifier, and the subscriber permanent identifier is associated with the key identifier.

With reference to the fourth aspect, in some implementations of the fourth aspect, the transceiver module is specifically configured to: send a verification request message to a visited access and mobility management function network element, where the verification request message includes the subscriber permanent identifier, and the verification request message is used to request to verify the subscriber permanent identifier; and receive a verification response message from the visited access and mobility management function network element, where the verification response message includes the verification result.

With reference to the fourth aspect, in some implementations of the fourth aspect, the processing module is further configured to obtain the subscriber permanent identifier of the terminal device.

With reference to the fourth aspect, in some implementations of the fourth aspect, the processing module is specifically configured to determine the subscriber permanent identifier corresponding to the key identifier in a local storage.

With reference to the fourth aspect, in some implementations of the fourth aspect, the transceiver module is further configured to receive an association relationship between the key identifier and the subscriber permanent identifier from an authentication server function network element. The visited authentication and key management for applications anchor function network element stores the association relationship between the key identifier and the subscriber permanent identifier.

With reference to the fourth aspect, in some implementations of the fourth aspect, the transceiver module is specifically configured to: send an application key get request message to an authentication server function network element, where the application key get request message includes the key identifier; and receive an application key get response message from the authentication server function network element, where the application key get response message includes the subscriber permanent identifier.

With reference to the fourth aspect, in some implementations of the fourth aspect, the transceiver module is further configured to receive an authentication and key management for applications anchor key from the visited access and mobility management function network element. The processing module is further configured to generate the root key based on the authentication and key management for applications anchor key.

With reference to the fourth aspect, in some implementations of the fourth aspect, the processing module is further configured to: when the verification result indicates that the verification on the subscriber permanent identifier fails, the processing module is further configured to reject the application key get request message.

With reference to the fourth aspect, in some implementations of the fourth aspect, the application key get request message further includes a first message authentication code and a computing parameter used to generate the first message authentication code, the first message authentication code is used for verification on a first key, and the first key is any one of the following: the root key, the authentication and key management for applications anchor key used to generate the root key, and a key derived based on the root key or the authentication and key management for applications anchor key. The processing module is further configured to: generate a second message authentication code based on the first key and the computing parameter; and determine whether the first message authentication code is the same as the second message authentication code. The transceiver module is specifically configured to: when the first message authentication code is the same as the second message authentication code, send the root key to the visited application function network element.

According to a fifth aspect, a communication apparatus is provided. The apparatus includes: a transceiver module, configured to receive a subscriber permanent identifier from an authentication server function network element; and a processing module, configured to store the subscriber permanent identifier when it is determined that a terminal device corresponding to the subscriber permanent identifier is located in an operator network in which the visited access and mobility management function network element is located.

With reference to the fifth aspect, in some implementations of the fifth aspect, the transceiver module is further configured to send the subscriber permanent identifier to a visited authentication and key management for applications anchor function network element.

With reference to the fifth aspect, in some implementations of the fifth aspect, the transceiver module is further configured to receive a verification request message from a visited authentication and key management for applications anchor function network element, where the verification request message includes the subscriber permanent identifier, and the verification request message is used to request to verify the subscriber permanent identifier. The processing module is further configured to determine that the subscriber permanent identifier is locally stored. The transceiver module is further configured to send a verification response message to the visited authentication and key management for applications anchor function network element, where the verification response message includes a verification result, and the verification result indicates that the verification on the subscriber permanent identifier succeeds.

With reference to the fifth aspect, in some implementations of the fourth aspect, the transceiver module is further configured to: receive an authentication and key management for applications anchor key from the authentication server function network element; and send the authentication and key management for applications anchor key to the visited authentication and key management for applications anchor function network element.

According to a sixth aspect, a communication apparatus is provided. The apparatus is configured to perform any method provided in the first aspect to the sixth aspect. Specifically, the apparatus may include units and/or modules configured to perform the method provided in the first aspect or the second aspect, for example, a processing module and/or a transceiver module (or referred to as a communication module).

In an implementation, the apparatus is a visited authentication and key management for applications anchor function network element, or a chip, a chip system, or a circuit in the visited authentication and key management for applications anchor function network element. When the apparatus is a chip, a chip system, or a circuit in a terminal device, the transceiver module may be an input/output interface, an interface circuit, an output circuit, an input circuit, a pin, a related circuit, or the like of the chip, the chip system, or the circuit, and the processing module may be a processor, processing circuit, logic circuit, or the like. In this case, the apparatus may include the unit and/or the module, for example, a processing unit and/or a communication unit, configured to perform the method according to the first aspect.

In another possible case, the apparatus is a visited access and mobility management function network element, or a chip, a chip system, or a circuit in the visited access and mobility management function network element. In this case, the apparatus may include the unit and/or the module, for example, a processing module and/or a transceiver module, configured to perform the method according to the second aspect.

Optionally, the transceiver module may be a transceiver circuit. Optionally, the input/output interface may be an input/output circuit.

According to a seventh aspect, a communication apparatus is provided. The apparatus includes: a memory, configured to store a program; and a processor, configured to execute the program stored in the memory. When the program stored in the memory is executed, the processor is configured to perform the method provided in the first aspect or the second aspect.

According to an eighth aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the foregoing information, the processor outputs the foregoing information to a transceiver, so that the transceiver transmits the information. After the foregoing information is output by the processor, other processing may further need to be performed on the foregoing information, and then processed information arrives at the transceiver. Similarly, when the processor receives the foregoing input information, the transceiver obtains/receives the foregoing information, and inputs the foregoing information into the processor. Further, after the transceiver receives the foregoing information, other processing may need to be performed on the foregoing information, and then processed information is input into the processor.

According to the foregoing principle, for example, receiving the request message mentioned in the foregoing methods can be understood as receiving input information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a ninth aspect, a computer-readable storage medium is provided. The computer-readable storage medium stores program code executed by a device, and the program code is for performing the method provided in the first aspect or the second aspect.

According to a tenth aspect, a computer program product including instructions is provided. When the computer program product runs on a computer, the computer is enabled to perform the method provided in the first aspect or the second aspect.

According to an eleventh aspect, a chip is provided. The chip includes a processor and a communication interface. The processor reads, through the communication interface, instructions stored in a memory, to perform the method provided in the first aspect or the second aspect.

Optionally, in an implementation, the chip may further include the memory. The memory stores instructions, and the processor is configured to execute the instructions stored in the memory. When the instructions are executed, the processor is configured to perform the method according to the first aspect or the second aspect.

According to a twelfth aspect, a communication system is provided, including the foregoing visited authentication and key management for applications anchor function network element and the foregoing visited access and mobility management function network element.

### BRIEF DESCRIPTION OF DRAWINGS

FIG. 1 is a diagram of a network architecture to which an embodiment of this application is applicable;
FIG. 2 is an architecture diagram of an AKMA key according to an embodiment of this application;
FIG. 3 is an example flowchart of a method 300 according to an embodiment of this application;
FIG. 4 is an example flowchart of a method 400 according to an embodiment of this application;
FIG. 5 is an example flowchart of a method 500 according to an embodiment of this application;
FIG. 6 is a diagram of an architecture of an AKMA roaming network applicable to an embodiment of this application;
FIG. 7 is an example flowchart of a method 700 according to an embodiment of this application;
FIG. 8 is an example flowchart of a method 800 according to an embodiment of this application;
(a) in FIG. 9 is an example flowchart of a method 900 according to an embodiment of this application;

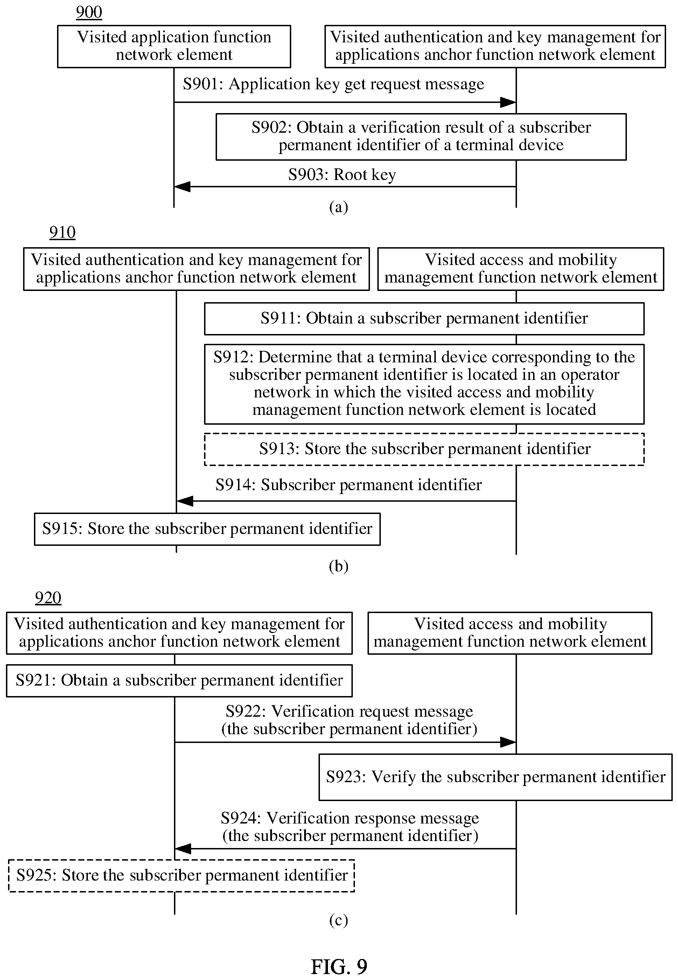

(b) in FIG. 9 is an example flowchart of a method 910 according to an embodiment of this application;
(c) in FIG. 9 is an example flowchart of a method 920 according to an embodiment of this application;

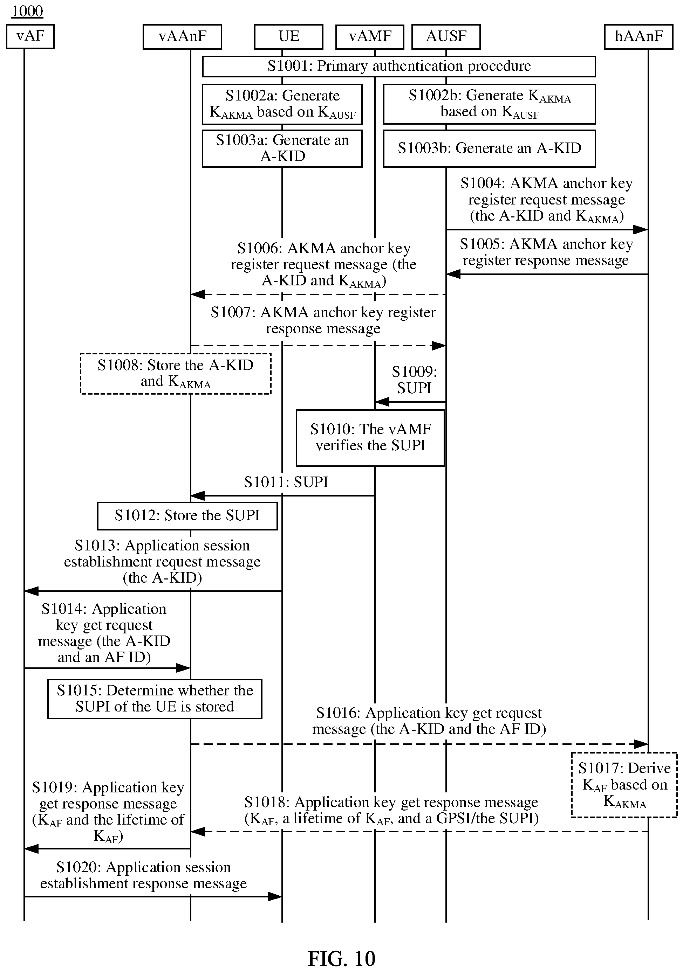

FIG. 10 is an example flowchart of a method 1000 according to an embodiment of this application;

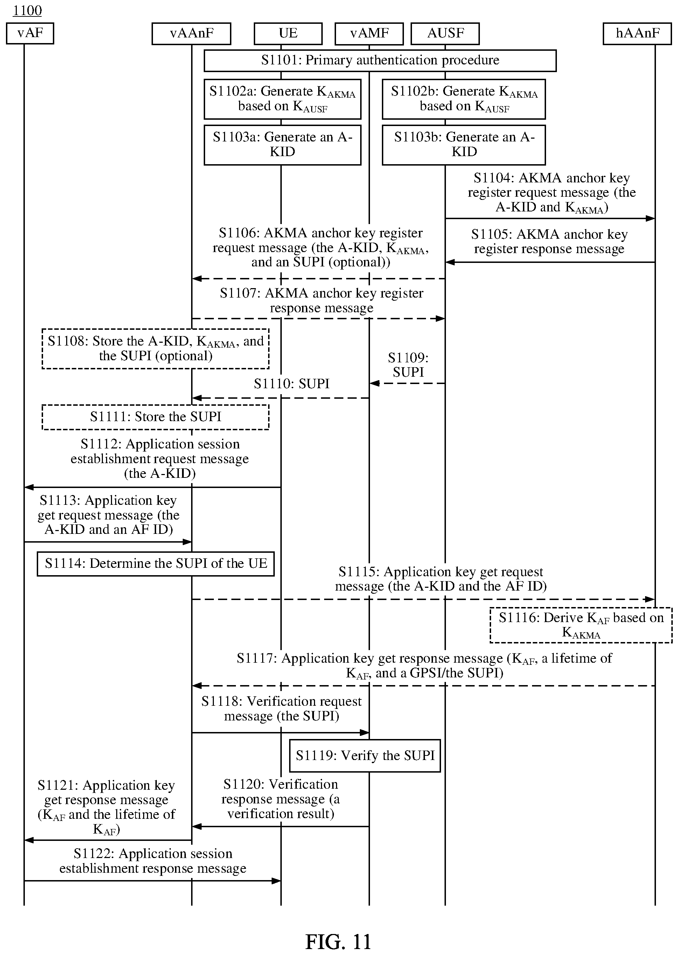

FIG. 11 is an example flowchart of a method 1100 according to an embodiment of this application;

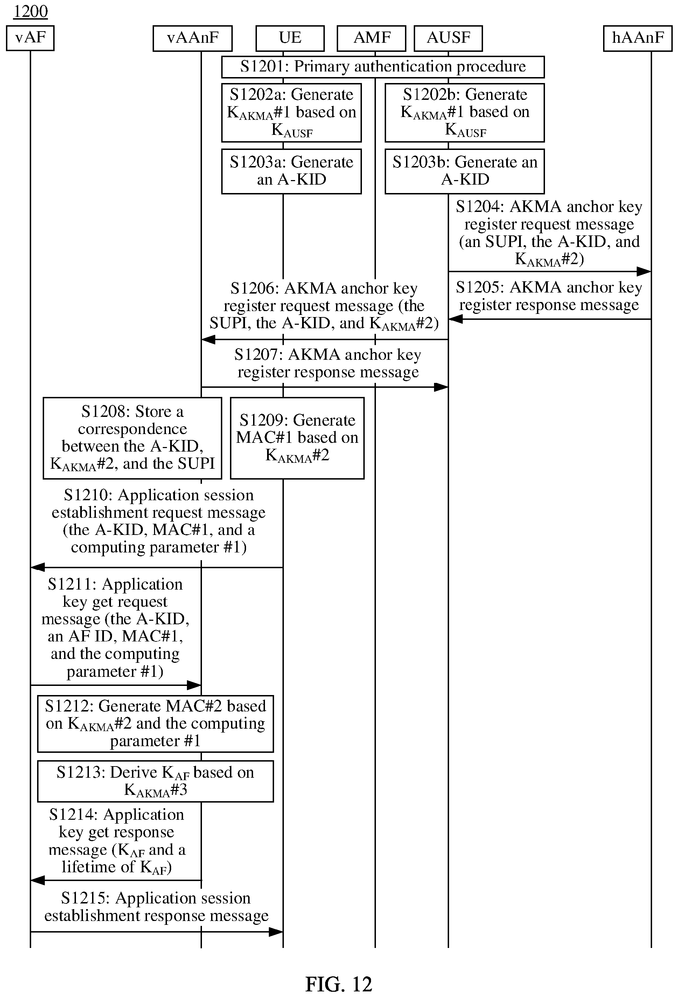

FIG. 12 is an example flowchart of a method 1200 according to an embodiment of this application;

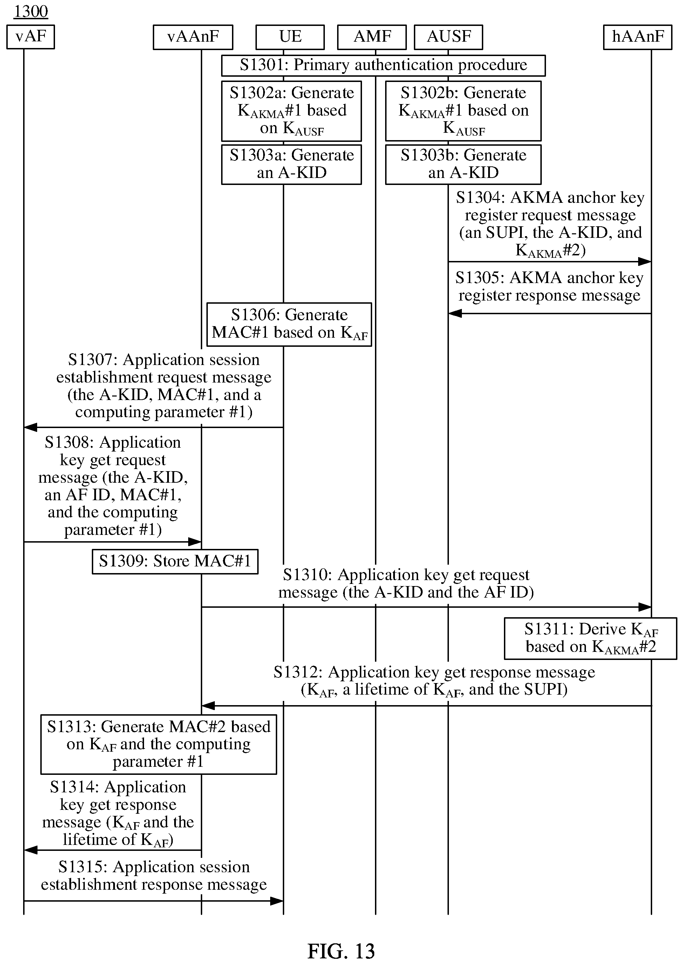

FIG. 13 is an example flowchart of a method 1300 according to an embodiment of this application;

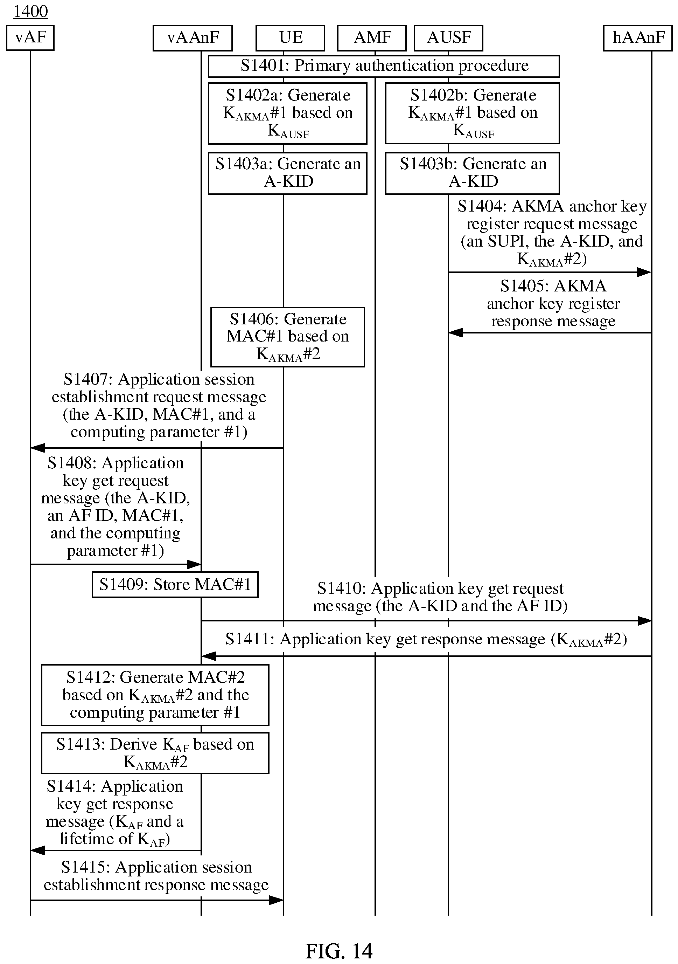

FIG. 14 is an example flowchart of a method 1400 according to an embodiment of this application;

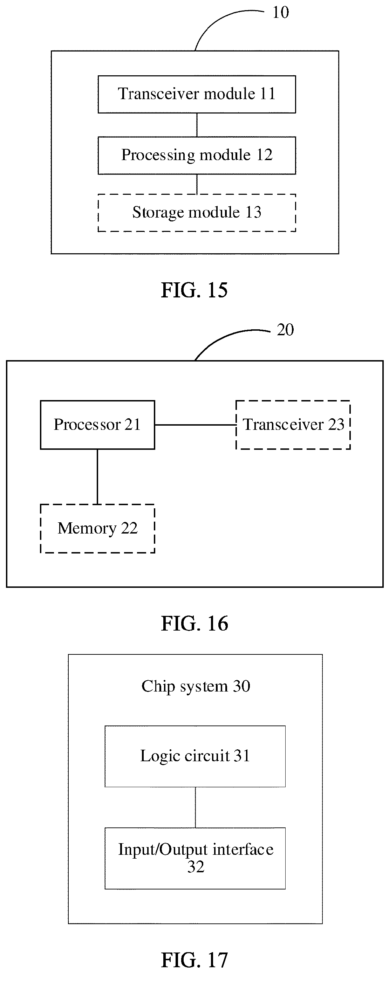

FIG. 15 is a block diagram of a communication apparatus according to an embodiment of this application;
FIG. 16 is a block diagram of a communication apparatus according to another embodiment of this application; and
FIG. 17 is a block diagram of a communication apparatus according to still another embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

In embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

It may be understood that various numerals used in this application are merely differentiated for ease of description, but are not used to limit the scope of this application. Sequence numbers of the foregoing processes do not mean an execution sequence, and the execution sequence of the processes should be determined based on functions and internal logic of the processes.

In the specification, claims, and accompanying drawings of this application, the terms "first", "second", "third", "fourth", various other term numerals, and the like (if existent) are intended to distinguish between similar objects but do not necessarily describe a specific order or sequence. It should be understood that the data termed in such a way are interchangeable in appropriate circumstances so that embodiments of the present invention described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be understood that, in this application, "indicating" may be understood as "enabling", and "enabling" may include direct enabling and indirect enabling. When a piece of information is described to enable A, the information may directly enable A or indirectly enable A, but it does not mean that the information definitely carries A. The terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device. "Preconfiguration" may include predefinition, for example, protocol definition. The "predefinition" may be implemented in a manner of prestoring corresponding code, a table, or other related information that may be used for indication in a device (for example, including network elements). A specific implementation thereof is not limited in this application. "Storage" in embodiments of this application may be storage in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited in this application. "Protocol" in embodiments of this application may be a standard protocol in the communication field, for example, may include a 4G/5G protocol, a new radio (new radio, NR) protocol, and a related protocol applied to a future communication system. This is not limited in this application. In the method flowcharts in the accompanying drawings of the specification of this application, a dashed box indicates an optional step.

The network architecture and the service scenario described in embodiments of this application are intended to describe the technical solutions in embodiments of this application more clearly, and do not constitute any limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The technical solutions provided in this application may be applied to various communication systems, for example, a fifth generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a part operated by an operator may be referred to as a public land mobile network (public land mobile network, PLMN) (which may also be referred to as an operator network or the like). The PLMN is a network established and operated by a government or an operator approved by the government to provide a land mobile communication service for the public, and is mainly a public network in which a mobile network operator (mobile network operator, MNO) provides a mobile broadband access service for a user. The PLMN described in this application may be specifically a network compliant with a requirement of the standard of the 3rd generation partnership project (3rd generation partnership project, 3GPP), which is briefly referred to as a 3GPP network. The 3GPP network usually includes but is not limited to a 5th generation (5th generation, 5G) mobile communication network (briefly referred to as 5G network), a 4th generation (4th generation, 4G) mobile communication network (briefly referred to as 4G network), and another future communication system such as a 6G network. For ease of description, the PLMN or the 5G network is used as an example for description in embodiments of this application.

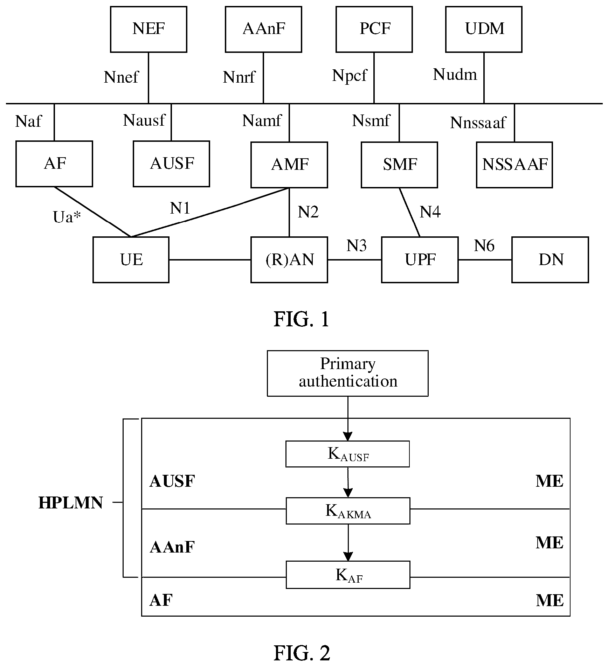

FIG. 1 is a diagram of a network architecture according to an embodiment of this application. For convenience, a 5G network architecture based on a service-based architecture in a non-roaming scenario is used as an example for description. The network architecture may include three parts, which are respectively a terminal device (which may also be referred to as user equipment (user equipment, UE)) part, a PLMN, and a data network (data network, DN). The PLMN may include but is not limited to: a network exposure function (network exposure function, NEF), a policy control function (policy control function, PCF), a unified data management function (unified data management, UDM), an authentication server function (authentication server function, AUSF), an access and mobility management function (access and mobility management function, AMF) network element, a session management function (session management function, SMF), a user plane function (user plane function, UPF), an application function (application function, AF), a network slice specific authentication and authorization function (Network Slice Specific Authentication and Authorization Function, NSSAAF), an authentication and key management for applications anchor function (authentication and key management for applications anchor function, AAnF) network element, a network exposure function (network exposure function, NEF), a (radio) access network ((radio) access network, (R)AN), and the like. In the PLMN, a part except the (radio) access network part may be referred to as a core network (core network, CN) part. For example, the following describes each network or function and a terminal device that uses the network as an example.

### 1. Terminal device

In embodiments of this application, the terminal device may be user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for a user, for example, a handheld device or a vehicle-mounted device that has a wireless connection function. Examples of the terminal device are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving or autopilot (self-driving or autopilot), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a future 5G network, a terminal device in a future evolved public land mobile network (public land mobile network, PLMN), and the like. This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands or smart jewelry for monitoring physical signs. In addition, in embodiments of this application, the terminal device may alternatively be a terminal device in an internet of things (internet of things, IoT) system.

### 2. Access network AN

The access network is a subnet of the PLMN, and is an implementation system between a service node (or a network function) in the PLMN and a terminal device 110. To access the PLMN, the terminal device 110 first passes through a (R)AN 150, and then is connected to the service node in the PLMN through the (R)AN 150. The (R)AN 150 in embodiments of this application may refer to the access network, or may refer to an access network device. This is not distinguished herein. The access network device is a device that provides a wireless communication function for the terminal device 110, and may also be referred to as an access device, a (R)AN device, a network device, or the like. The access network device includes but is not limited to a next generation node base station (next generation node base station, gNB) in a 5G system, an evolved NodeB (evolved NodeB, eNB) in an LTE system, a radio network controller (radio network controller, RNC), a NodeB (NodeB, NB), a base station controller (base station controller, BSC), a base transceiver station (base transceiver station, BTS), a home NodeB (home evolved NodeB, or home NodeB, HNB), a baseband unit (baseband unit, BBU), a transmitting and receiving point (transmitting and receiving point, TRP), a transmitting point (transmitting point, TP), a small base station device (pico), a mobile switching center, or a network device in a future network. It may be understood that a specific type of the access network device is not limited in this application. In systems using different radio access technologies, devices with functions of the access network device may have different names.

Optionally, in some deployment of the access device, the access device may include a central unit (centralized unit, CU), a distributed unit (distributed unit, DU), and the like. In some other deployment of the access device, the CU may be further split into a CU-control plane (control plane, CP), a CU-user plane (user plane, UP), and the like. In still some other deployment of the access device, the access device may alternatively be in an open radio access network (open radio access network, ORAN) architecture or the like. A specific deployment manner of the access device is not limited in this application.

### 3. Access and mobility management function (AMF) network element

The access and mobility management function network element may be used for mobility management, access management, and the like, and may be configured to implement another function other than session management in a mobility management entity (mobility management entity, MME) function, for example, a function such as lawful intercept or access authorization. In addition, the access and mobility management function network element is further configured to transfer user policies between the terminal device and a policy control function (policy control function, PCF) network element. In embodiments of this application, the access and mobility management function network element may be configured to implement functions of an access and mobility management network element.

### 4. Session management function (SMF) network element

The session management function network element may be used for session management, allocation and management of internet protocol (internet protocol, IP) addresses of the terminal device, and selection and management of a user plane function (user plane function, UPF) network element, termination of interfaces towards policy control and charging functions, and downlink data notification, and the like. In embodiments of this application, the session management function network element may be configured to implement functions of a session management network element.

### 5. User plane function (UPF) network element

The user plane function network element may be used for packet routing and forwarding, quality of service (quality of service, QoS) parameter handling for user plane data, or the like. User data may be accessed to the data network (data network, DN) via the network element. In embodiments of this application, the user plane function network element may be configured to implement functions of a user plane network element. For example, when a session is established on different user plane function network elements, service experience of the terminal device is also different. Therefore, the session management function network element needs to select an appropriate user plane function network element for a session of the terminal device.

### 6. Policy control function (PCF) network element

The policy control network element supports a unified policy framework to govern network behavior, provides policy rule information and the like to control plane function network elements (for example, the access and mobility management function network element and the session management function network element), and is mainly responsible for policy control functions such as session-level or service flow-level charging, QoS bandwidth guarantee and mobility management, and terminal device policy decision-making. The policy control network element may have both a capability of an access and mobility management policy control network element (policy control function for access and mobility control, AM PCF) and a capability of a session management policy control network element (PCF for session management, SM PCF). Logically, the access and mobility management policy control network element and the session management policy control network element may be understood as different network elements that respectively have different capabilities. In an actual deployment scenario, the access and mobility management policy control network element and the session management policy control network element may be a same policy control network element entity, that is, may be deployed separately, or may be two different policy control network element entities, that is, may be deployed together.

For example, the access and mobility management policy control network element is directly connected to the access and mobility management function network element, and the access and mobility management policy control network element provides a mobility-related policy and an access selection-related policy of the terminal device for the access and mobility management function network element. The mobility policy includes, for example, service area restriction management, radio access technology frequency selection priority (radio access technology frequency selection priority, RFSP) index (index) management, and session management function network element selection management. The access selection-related policy of the terminal device includes an access network discovery and selection policy (access network discovery and selection policy, ANDSP) and a route selection policy (route selection policy, URSP) of the terminal device. For another example, the session management policy control network element is directly connected to the session management function network element, and provides protocol data unit (protocol data unit, PDU) session-related policies for the session management function network element. The PDU session-related policy includes, for example, a gating control policy, a charging policy, a QoS control policy, and a usage monitoring control policy.

It should be understood that in a roaming scenario, a visited policy control network element may logically include a visited access and mobility management policy control network element and a visited session management policy control network element, and a home policy control network may logically include a home access and mobility management policy control network element and a home session management policy control network element. During actual deployment, the visited access and mobility management policy control network element and the visited session management policy control network element may be a same visited policy control network element entity, or may be two different visited policy control network element entities. Similarly, during actual deployment, the home access and mobility management policy control network element and the home session management policy control network element may be a same home policy control network element entity, or may be two different home policy control network element entities.

### 7. Network capability exposure function (NEF) network element

The network capability exposure function network element is configured for exposure of service and network capability information (such as a terminal location) and the like provided by a 3GPP network function.

### 8. Unified data management (UDM) network element

The unified data management network element may be used for unified data management, and supports authentication trust status processing, user identification handling, access authorization, registration and mobility management, subscription management, SMS management, and the like in a 3GPP authentication and key agreement mechanism.

### 9. AKMA anchor function (AAnF) network element

The AAnF interacts with the AUSF to request an AKMA root key Kakma, and is responsible for generating, for the AF, a key Kaf used by the AF and a lifetime of Kaf.

### 12. Authentication server function (AUSF) network element

The authentication server function network element is a control plane function provided by operators, and is usually used for primary authentication, to be specific, authentication between the terminal device (a subscriber) and the PLMN. In the AKMA scenario, the authentication server function network element may generate an AKMA root key K_{AKMA} for the AAnF.

### 13. Application function (AF) network element

The application function network element mainly interacts with other NFs in the CN to provide corresponding services, for example, providing visited network (visited PLMN or VPLMN) selection information of roaming UE, guiding routing of data flows, and accessing an NEF. The AF may be deployed inside the PLMN by an operator or outside a network of the operator. If the AF is in the PLMN, the AF may directly interact with a PCF. If the AF is outside the PLMN, the NEF acts as a middleman to forward interaction content between the AF and the PCF. In the AKMA scenario, the AF can interact with the AAnF to obtain K_{AF} and a lifetime of K_{AF}.

### 14. Network slice-specific authentication and authorization function (NSSAAF) network element

The network slice-specific authentication and authorization function network element is a control plane network function provided by the PLMN, and is configured to support slice authentication performed between a terminal and the DN.

### 15. Data network (DN)

The data network may also be referred to as a packet data network (packet data network, PDN), and may be usually deployed outside the PLMN, for example, a third-party network (certainly, the DN may alternatively be deployed in the PLMN, and this is not limited herein). For example, the PLMN may access a plurality of data network DNs, and a plurality of services may be deployed on the DNs, to provide a data service and/or a voice service for UE. For example, the DN may be a private network of a smart factory, a sensor installed in a workshop in the smart factory may be UE, a control server of the sensor is deployed in the DN, and the control server may provide a service for the sensor. The sensor may communicate with the control server, to obtain instructions of the control server, transmit collected sensor data to the control server according to the instructions, and the like. For another example, the DN may be an internal office network of a company, a mobile phone or a computer of an employee of the company may be UE, and the mobile phone or the computer of the employee may access information, data resources, and the like on the internal office network of the company. The UE may establish a connection to the PLMN through an interface (for example, an N1 interface in FIG. 1) provided by the PLMN, and use a service such as data and/or voice provided by the PLMN. The UE may further access the DN via the PLMN, and use an operator service deployed on the DN and/or a service provided by a third party. The third party may be a service party other than the PLMN and the terminal device 110, and may provide another service such as data and/or voice for the UE. A specific representation form of the third party may be specifically determined based on an actual application scenario, and is not limited herein.

In FIG. 1, Nnef, Npcf, Nudm, Nnssf, Nausf, Namf, Nsmf, Nnssaaf, Naf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that FIG. 1 provides merely an example in which the terminal device is UE for description, and names of interfaces between network functions in FIG. 1 are merely examples. In specific implementation, an interface name in the system architecture may alternatively be another name. This is not limited in this application.

The diagram of the network architecture shown in FIG. 1 may be understood as a service-based architecture. In the service-based architecture, the PLMN may orderly combine some or all network functions as required based on a specific scenario requirement, to implement customization of a network capability and a service, to deploy dedicated networks for different services, that is, implement 5G network slicing (network slicing). With a network slicing technology, an operator can respond to customer requirements more flexibly and quickly and support flexible allocation of network resources.

It should be understood that the foregoing network architecture applied to embodiments of this application is merely an example of a network architecture described from a perspective of a conventional point-to-point architecture and a servitization architecture, and a network architecture applicable to embodiments of this application is not limited thereto. Any network architecture that can implement functions of the foregoing network elements is applicable to embodiments of this application.

It should be understood that names of the interfaces between the network elements in FIG. 1 are merely an example, and the interfaces may have other names during specific implementation. This is not specifically limited in this application. In addition, names of messages (or signaling) transmitted between the foregoing network elements are merely examples, and do not constitute any limitation on functions of the messages.

It may be understood that the foregoing network elements or functions may be network elements in a hardware device, software functions running on dedicated hardware, or virtualized functions instantiated on a platform (for example, a cloud platform). Optionally, the foregoing network elements or functions may be implemented by one device, may be jointly implemented by a plurality of devices, or may be implemented by one functional module in one device. This is not specifically limited in embodiments of this application.

It should be further understood that, in the communication system shown in FIG. 1, the functions of the constituent network elements are merely examples. When the constituent network elements are used in embodiments of this application, not all the functions are necessary.

In addition, names of the network elements (such as the PCF and the AMF) included in FIG. 1 are merely names, and the names do not constitute any limitation on the functions of the network elements. In the 5G network and the another future network, the foregoing network elements may alternatively have other names. This is not specifically limited in embodiments of this application. For example, in a 6G network, some or all of the foregoing network elements may still use terms in 5G, or may have other names. A general description is provided herein. Details are not described again below.

It should be further noted that communication between the network elements implementing the control plane functions in FIG. 1 is described by using a non-service-oriented interface as an example, but does not constitute any limitation on the protection scope of embodiments of this application. A person skilled in the art may understand that the network elements implementing the control plane functions in FIG. 1 may alternatively communicate with each other through a service-oriented interface. For example, an external service-oriented interface provided by the AMF may be Namf; a service-oriented interface provided by the SMF may be Nsmf; a service-oriented interface provided by the AF may be Naf; and an external service-oriented interface provided by the PCF may be Npcf.

For ease of understanding the solutions provided in embodiments of this application, the following uses a 5G system as an example to describe some terms or concepts in this application.

### 1. Authentication and key management for applications (authentication and key management for applications, AKMA) key mechanism

The AKMA key mechanism is a mechanism based on 5G primary authentication that enables an application layer key is shared between UE and an AF. FIG. 2 shows an example of a diagram of an AKMA key architecture. In the key architecture, UE and a network side generate respective keys.

On the network side, after primary authentication of the UE, an AUSF may generate an AKMA root key K_{AKMA} based on K_{AUSF} generated in the primary authentication procedure. K_{AKMA} is a UE-specific key (that is, each UE has K_{AKMA} exclusive to the UE). The AUSF transfers the generated K_{AKMA} to an AAnF, and the AAnF generates an application key K_{AF} for an AF based on K_{AKMA}. K_{AF} is a UE-specific and application-specific key (that is, UE uses dedicated K_{AF} to access an AF).

On the UE side, in the primary authentication procedure, the UE uses the same parameters and algorithms as those used to generate K_{AUSF} on the network side. After the primary authentication succeeds, the UE generates K_{AKMA} based on K_{AUSF} by using a same parameter and algorithm as those on the network side, and generates K_{AF} based on K_{AKMA} by using a same parameter and algorithm as those on the network side. Then, the UE side and the network side protect traffic between the UE and an AF based on K_{AF}.

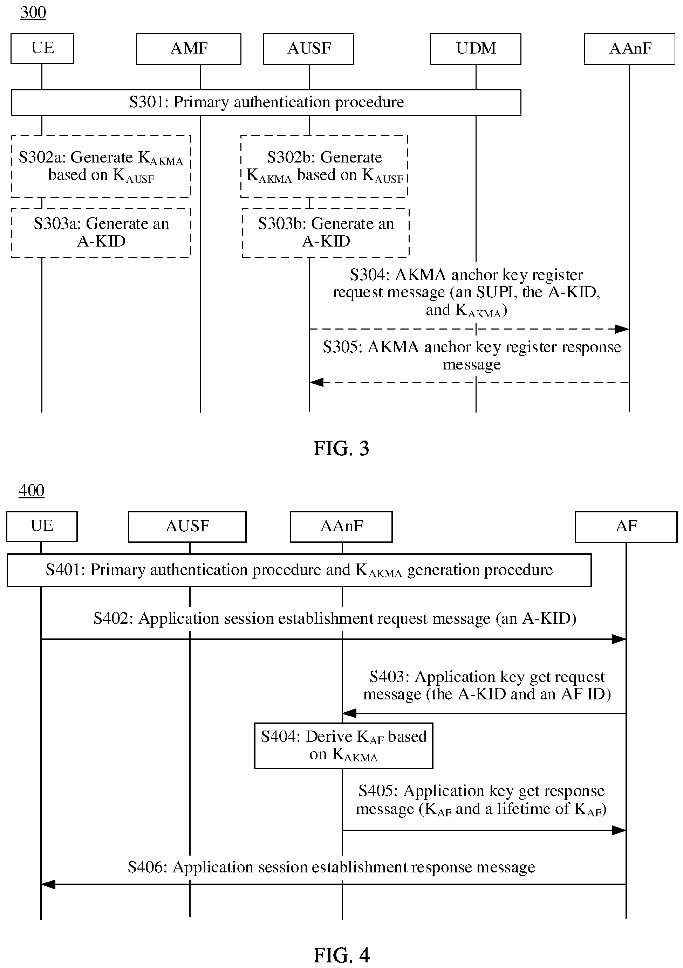

The following describes an example of the process of generating K_{AKMA} and K_{AF} with reference to FIG. 3 to FIG. 5.

FIG. 3 is an example flowchart of a method 300 according to an embodiment of this application. In the method 300, UE and an AAnF each obtain K_{AKMA} and an A-KID.

The following provides example descriptions of the method 300 with reference to steps in FIG. 3.

S301: Primary authentication procedure (primary authentication procedure). A detailed process is not limited in this application.

In the primary authentication procedure, an AUSF sends a UE authentication get request (Numd_UEAuthentication Get Request) message to a UDM. The UE authentication get request message carries an SUPI or SUCI. The message is used to request an authentication vector from the UDM. The authentication vector is used to trigger primary authentication (primary authentication) between a core network and the UE.

The UDM sends a UE authentication get response (Num_UEAuthentication_Get Response) message to the AUSF, and the UE authentication get response message carries the authentication vector AV. When the UDM determines, based on subscription information, that the UE supports an AKMA service, the UE further uses the UE authentication get response message to carry AKMA indication information. The AKMA indication information indicates that the AUSF needs to generate an AKMA root key K_{AKMA} for the UE.

Optionally, in S302a, the UE generates K_{AKMA} based on K_{AUSF}.

Optionally, in S303a, the UE generates an AKMA key identifier (AKMA-Key Identifier, A-KID).

For example, if the UE supports the AKMA service, before starting communication with an AKMAAF, the UE uses K_{AUSF} to generate K_{AKMA} and the A-KID.

Optionally, in S302b, the UE generates K_{AKMA} based on K_{AUSF}.

Optionally, in S303b, the UE generates an AKMA key identifier (AKMA-Key Identifier, A-KID).

For example, if the AUSF receives the AKMA indication information from the UDM, the AUSF stores K_{AUSF}, and generates K_{AKMA} and the A-KID based on K_{AUSF} after the primary authentication procedure is successfully completed.

Optionally, in S304, the AUSF sends an AKMA anchor key register request message to the AAnF. Correspondingly, the AAnF receives the AKMA anchor key register request message from the AUSF.

For example, the AUSF selects an AAnF, and then sends the AKMA anchor key register request (Naanf_AKMA_AnchorKey_Register Request) message to the selected AAnF. The AKMA anchor key register request message carries the SUPI, the A-KID, and K_{AKMA}.

S305: The AAnF sends an AKMA anchor key register response message to the AUSF. Correspondingly, the AUSF receives the AKMA anchor key register response message from the AAnF.

For example, after receiving the AKMA anchor key register request message from the AUSF, the AAnF returns the AKMA anchor key register response (Naanf_AKMA_AnchorKey_Register Response) message to the AUSF.

Optionally, after receiving the AKMA anchor key register response message from the AAnF, the AUSF deletes K_{AKMA} and the A-KID.

Based on the foregoing procedure, the UE and the AAnF each obtain K_{AKMA} and the A-KID.

FIG. 4 is an example flowchart of a method 400 according to an embodiment of this application. In this example, an AF is located in a 3GPP network. That is, the AF may directly interact with a core network element. In the method 400, UE and the AF each obtain K_{AF} used for communication between the UE and the AF. The following provides example descriptions of the method 400 with reference to steps in FIG. 4.

S401: A primary authentication procedure and a K_{AKMA} generation procedure.

For example, by using S401, the UE and a network side complete the primary authentication procedure, and the UE and an AAnF each obtain K_{AKMA} and an A-KID. A specific process performed in S401 is not limited herein. In an example, S401 may be performing the procedure in S301 to S305 in the method 300.

S402: The UE sends an application session establishment request message to the AF. Correspondingly, the AF receives the application session establishment request message from the UE.

For example, the UE sends the application session establishment request (Application Session Establishment Request) message to the AF. The application session establishment request message is used to request to establish communication between the UE and the AF. The application session establishment request message includes an A-KID, and the A-KID is used by the AAnF to search for K_{AKMA} corresponding to the A-KID.

S403: The AF sends an application key get request message to the AAnF. Correspondingly, the AAnF receives the application key get request message from the AF.

For example, after receiving the application session establishment request message from the UE, the AF sends the application key get request (Naanf_AKMA_ApplicationKey_Get_Request) message to the AAnF. The application key get request message carries the A-KID and an AF_ID. The A-KID is obtained by the AF from the application session establishment request message in S402. The AF_ID is an input parameter used to generate K_{AF}.

S404: The AAnF derives K_{AF} based on K_{AKMA}.

For example, after receiving the application key get request message from the AF, the AAnF searches a local storage for K_{AKMA} corresponding to the A-KID based on the A-KID carried in the application key get request message, then generates K_{AF} based on K_{AKMA}, and determines a lifetime of K_{AF}. The lifetime of K_{AF} indicates expiration time of K_{AF}.

S405: The AAnF sends an application key get response message to the AF. Correspondingly, the AF receives the application key get response message from the AAnF.

For example, after generating K_{AF} and the lifetime of K_{AF} in S404, the AAnF sends the application key get response (Naanf_AKMA_ApplicationKey_Get Response) to the AF, where the application key get response message carries K_{AF} and the lifetime of K_{AF}.

S406: The AF sends an application session establishment response message to the UE. Correspondingly, the UE receives the application session establishment response message from the AF.

For example, after receiving the application key get response message from the AAnF, and obtaining K_{AF} and the lifetime of K_{AF} from the application key get response message, the AF returns the application session establishment response (Application Session Establishment Response) message to the UE.

Based on the foregoing solution, the UE and the AF each obtain K_{AF} used for communication between the UE and the AF.

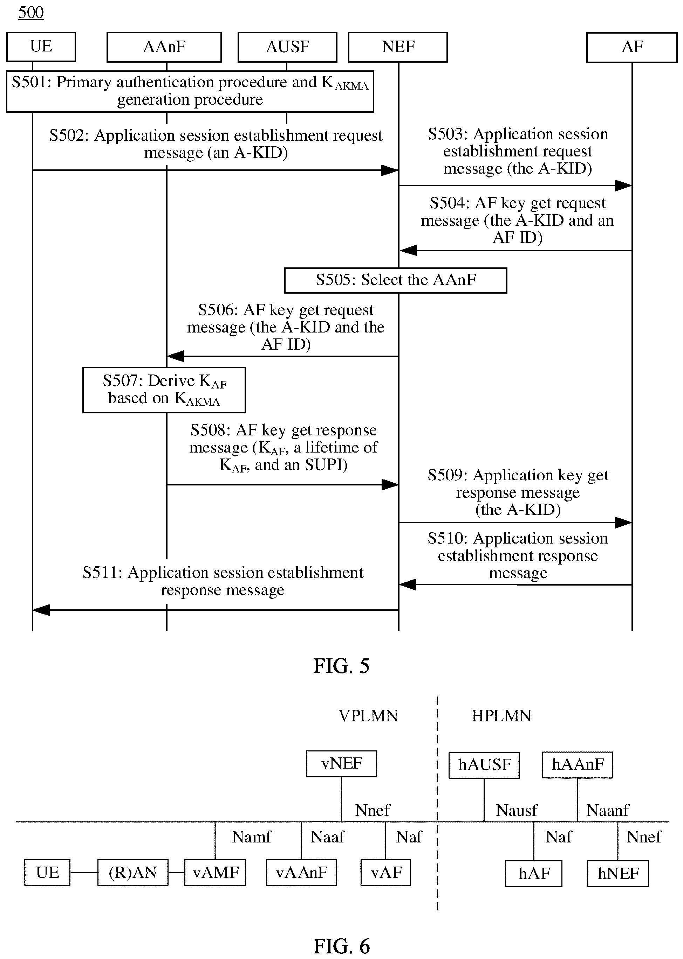

FIG. 5 is an example flowchart of a method 500 according to an embodiment of this application. In this example, an AF is located outside a 3GPP network. That is, the AF needs to interact with a core network element via an NEF. In the method 500, UE and the AF each obtain K_{AF} used for communication between the UE and the AF. The following provides example descriptions of the method 500 with reference to steps in FIG. 5.

S501: A primary authentication procedure and a K_{AKMA} generation procedure.

For example, by using S501, the UE and a network side complete the primary authentication procedure, and the UE and an AAnF each obtain K_{AKMA} and an A-KID. A specific process performed in S501 is not limited herein. In an example, S501 may be performing the procedure in S301 to S305 in the method 300.

S502: The UE sends an application session establishment request message to the NEF. Correspondingly, the NEF receives the application session establishment request message from the UE.

S503: The NEF sends the application session establishment request message to the AF. Correspondingly, the AF receives the application session establishment request message from the NEF.

For example, the UE sends the application session establishment request (Application Session Establishment Request) message to the NEF. After receiving the application session establishment request message from the UE, the NEF forwards the application session establishment request message to the AF. The application session establishment request message is used to request to establish communication between the UE and the AF. The application session establishment request message includes an A-KID, and the A-KID is used by the AAnF to search for K_{AKMA} corresponding to the A-KID.

S504: The AF sends an AF key get request message to the NEF. Correspondingly, the NEF receives the application key get request message from the AF.

For example, after receiving the application session establishment request message from the UE, the AF sends the application key get request (Naanf_AKMA_ApplicationKey_Get_Request) message to the NEF. The application key get request message carries the A-KID and an AF_ID. The A-KID is obtained by the AF from the application session establishment request message in S503. The AF_ID is an input parameter used to generate K_{AF}.

S505: The NEF selects an AAnF.

S506: The NEF sends an AF key get request message to the AAnF. Correspondingly, the AAnF receives the AF key get request message from the NEF.

For example, after receiving the AF key get request message from the AF, the NEF selects the AAnF, and then forwards the AF key get request message to the selected AAnF.

S507: The AAnF derives K_{AF} based on K_{AKMA}. A specific process is similar to S404 in the method 400, and details are not described herein again.

S508: The AAnF sends an application key get response message to the AF. Correspondingly, the AF receives the application key get response message from the AAnF.

S509: The NEF sends the application key get response message to the AF. Correspondingly, the AF receives the application key get response message from the NEF.

For example, after generating K_{AF} and a lifetime of K_{AF} in S507, the AAnF sends the application key get response (Naanf_AKMA_ApplicationKey_Get Response) to the NEF. The application key get response message carries K_{AF} and the lifetime of K_{AF}. Then, the NEF forwards the application key get response message to the AF.

S510: The AF sends an application session establishment response message to the NEF. Correspondingly, the NEF receives the application session establishment response message from the AF.

S510: The NEF sends the application session establishment response message to the UE. Correspondingly, the UE receives the application session establishment response message from the NEF.

For example, after receiving the application key get response message from the AAnF, and obtaining K_{AF} and the lifetime of K_{AF} from the application key get response message, the AF sends the application session establishment response (Application Session Establishment Response) message to the NEF, and then the NEF forwards the application session establishment response message to the UE.

Based on the foregoing solution, the UE and the AF each obtain K_{AF} used for communication between the UE and the AF.

### 2. A-KID

Each K_{AKMA} is identified by a unique key identifier A-KID. When UE accesses an AF, the UE sends an A-KID to the AF, to indicate K_{AKMA} used by the UE, so as to ensure that the UE and the AF use same K_{AKMA}.

The A-KID is in an NAI format, that is, username@realm. A username part includes an RID and an A-TID (AKMA Temporary UE Identifier). A realm part includes a home network identifier.

The RID (routing indicator, routing indicator) is used to select an AUSF or a UDM. The RID is a part of an SUCI, and is sent from a UE side to a network side along with the SUCI. An AMF uses RID+HPLMN ID to select an AUSF, and the AUSF uses RID+HPLMN ID to select a UDM. The home network identifier identifies a home network of the UE, and is an MCC (Mobile Country Code) and an MNC (Mobile Network Code).

When the UE moves from a home network to a visited network (or referred to as a roaming network), the UE may initiate a registration procedure to the visited network, to establish a network connection, and communicate with a visited AF.

FIG. 6 is a diagram of an architecture of an AKMA roaming network applicable to an embodiment of this application. In the network architecture shown in FIG. 6, UE is a roaming user, and subscription information of the UE is in a home network (or referred to as a home network, that is, an HPLMN). Currently, the UE accesses a visited data network via a RAN in a visited network (or referred to as a roaming network, or a visited network, that is, a VPLMN).

For convenience, in this embodiment of this application, an AUSF, an AAnF, an AF, and an NEF in the HPLMN are respectively denoted as an hAUSF, an hAAnF, an hAF, and an hNEF, and an AMF, an AAnF, an AF, and an NEF in the vPLMN are respectively denoted as a vAMF, a vAAnF, a vAF, and a vNEF. The vAF can obtain K_{AKMA} or K_{AF} from the visited VAAnF to ensure secure communication between the UE and the vAF. For a specific implementation, refer to descriptions of the subsequent method 700 to the method 1400. Details are not described herein again.

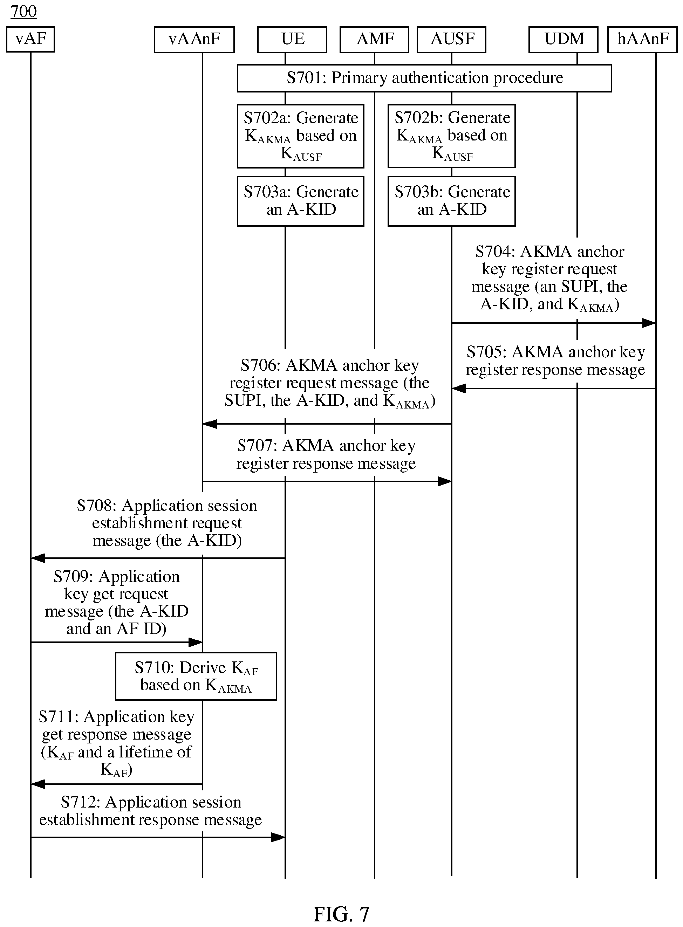

FIG. 7 is an example flowchart of a method 700 according to an embodiment of this application. In the method 700, after generating K_{AKMA}, an AUSF sends K_{AKMA} to both an hAAnF and a vAAnF. The following provides example descriptions of the method 700 with reference to steps in FIG. 7.

It may be understood that S701 to S705 are similar to S301 to S305 in the method 300. For brevity, details are not described herein again.

Optionally, in S706, the AUSF sends an AKMA anchor key register request message to the vAAnF. Correspondingly, the vAAnF receives the AKMA anchor key register request message from the AUSF.

For example, the AUSF selects a vAAnF, and then sends the AKMA anchor key register request (Naanf_AKMA_AnchorKey_Register Request) message to the selected vAAnF. The AKMA anchor key register request message carries an SUPI, an A-KID, and K_{AKMA}.

S707: The vAAnF sends an AKMA anchor key register response message to the AUSF. Correspondingly, the AUSF receives the AKMA anchor key register response message from the vAAnF.

For example, after receiving the AKMA anchor key register request message from the AUSF, the vAAnF returns the AKMA anchor key register response (Naanf_AKMA_AnchorKey_Register Response) message to the AUSF.

S708: UE sends an application session establishment request message to a vAF. Correspondingly, the AF receives the application session establishment request message from the UE.

For example, the UE sends the application session establishment request (Application Session Establishment Request) message to the vAF. The application session establishment request message is used to request to establish communication between the UE and the vAF. The application session establishment request message includes an A-KID, and the A-KID is used by the AAnF to search for K_{AKMA} corresponding to the A-KID.

S709: The vAF sends an application key get request message to the vAAnF. Correspondingly, the vAAnF receives the application key get request message from the vAF.

For example, after receiving the application session establishment request message from the UE, the vAF sends the application key get request (Naanf_AKMA_ ApplicationKey_Get_Request) message to the vAAnF. The application key get request message carries the A-KID and an AF_ID. The A-KID is obtained by the vAF from the application session establishment request message in S708. The AF_ID is an input parameter used to generate K_{AF}.

S710: The vAAnF derives K_{AF} based on K_{AKMA}.

For example, after receiving the application key get request message from the vAF, the vAAnF searches, based on the A-KID carried in the application key get request message, a local storage for K_{AKMA} corresponding to the A-KID. It may be understood that K_{AKMA} is obtained by the vAAnF from the AUSF in S706. Then, the vAAnF generates K_{AF} based on K_{AKMA}, and determines a lifetime of K_{AF}. The lifetime of K_{AF} indicates expiration time of K_{AF}.

S711: The vAAnF sends an application key get response message to the vAF. Correspondingly, the vAF receives the application key get response message from the vAAnF.

For example, after generating K_{AF} and the lifetime of K_{AF} in S404, the vAAnF sends the application key get response (Naanf_AKMA_ApplicationKey_Get Response) to the vAF. The application key get response message carries K_{AF} and the lifetime of K_{AF}.

S712: The vAF sends an application session establishment response message to the UE. Correspondingly, the UE receives the application session establishment response message from the vAF.

For example, after receiving the application key get response message from the vAAnF, and obtaining K_{AF} and the lifetime of K_{AF} from the application key get response message, the vAF returns the application session establishment response (Application Session Establishment Response) message to the UE.

Based on the foregoing solution, the UE and the vAF each obtain K_{AF} used for communication between the UE and the vAF.

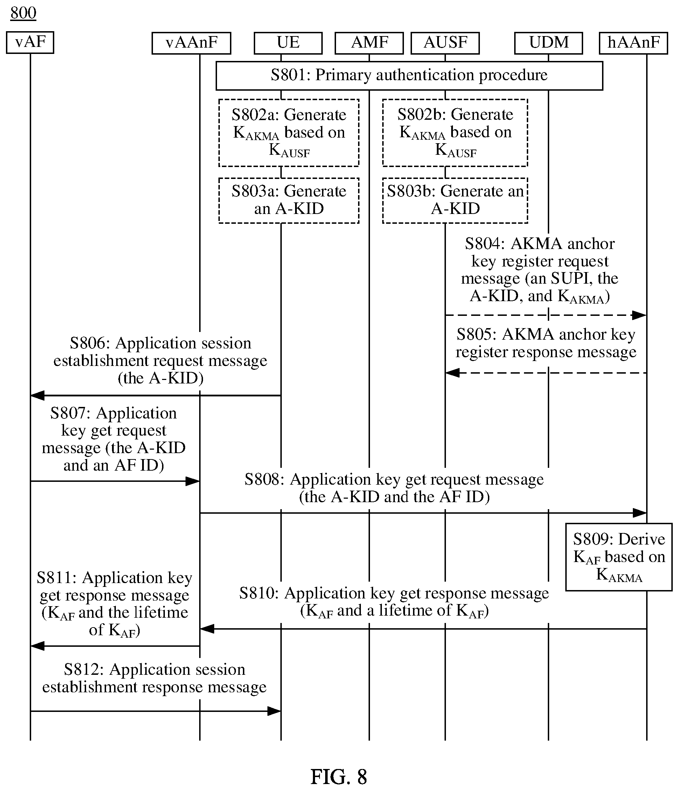

FIG. 8 is an example flowchart of a method 800 according to an embodiment of this application. In the method 800, after receiving an application session establishment request message from UE, a vAAnF obtains K_{AF} from an hAAnF. The following provides example descriptions of the method 800 with reference to steps in FIG. 8.

It may be understood that S801 to S805 are similar to S301 to S305 in the method 300. For brevity, details are not described herein again.

S806: The UE sends an application session establishment request message to a vAF. Correspondingly, the AF receives the application session establishment request message from the UE.

S807: The vAF sends an application key get request message to the vAAnF. Correspondingly, the vAAnF receives the application key get request message from the vAF.

S806 and S807 are similar to S708 and S709 in the method 700, and details are not described herein again.

S808: The vAAnF sends the application key get request message to the hAAnF. Correspondingly, the hAAnF receives the application key get request message from the vAAnF.

For example, after receiving the application key get request message from the vAF, the vAAnF forwards the application key get request message to the hAAnF. Optionally, when determining that no K_{AKMA} corresponding to an A-KID is locally stored, the vAAnF may forward the application key get request message to the hAAnF.

S809: The hAAnF derives K_{AF} based on K_{AKMA}.

For example, after receiving the application key get request message from the vAAnF, the hAAnF locally searches, based on the A-KID carried in the application key get request message, for K_{AKMA} corresponding to the A-KID, then derives K_{AF} based on K_{AKMA}, and determines a lifetime of K_{AF}.

S810: The hAAnF sends an application key get response message to the vAAnF. Correspondingly, the vAAnF receives the application key get response message from the hAAnF.

For example, after generating K_{AF} and the lifetime of K_{AF} in S809, the hAAnF sends K_{AF} and the lifetime of K_{AF} to the vAAnF via the application key get response message.

It may be understood that the hAAnF may not perform S809, but directly send K_{AKMA} to the vAAnF via the application key get response message. In this case, after receiving the application key get response message from the hAAnF, the vAANF derives K_{AF} based on K_{AKMA}, and determines a lifetime of K_{AF}.

S811: The vAAnF sends the application key get response message to the vAF, where the key get response message includes K_{AF} and the lifetime of K_{AF}. Correspondingly, the vAF receives the key get response message from the vAAnF.

S812: The vAF sends an application session establishment response message to the UE. Correspondingly, the UE receives the application session establishment response message from the vAF.

Based on the foregoing solution, the UE and the vAF each obtain K_{AF} used for communication between the UE and the vAF.

The method 700 and the method 800 describe a solution in which the UE and the vAF obtain a key used to protect communication security in a roaming scenario. However, in the foregoing solution, the vAF generates the key based on information obtained from a home network and communicates with the UE. However, the information obtained by the vAF may be inaccurate. Consequently, a service of the UE is affected.

(a) in FIG. 9 is an example flowchart of a method 900 according to an embodiment of this application. The following provides example descriptions of the method 900 with reference to steps in (a) in FIG. 9.

S901: A visited application function network element sends an application key get request message to a visited authentication and key management for applications anchor function network element. Correspondingly, the visited authentication and key management for applications anchor function network element receives the application key get request message from the visited application function network element.

For example, the visited application function network element sends the application key get request message to the visited authentication and key management for applications anchor function network element, and the application key get request message includes a key identifier. The application key get request message is used to request to obtain a root key, and the root key is used to protect communication data between the visited application function network element and a terminal device.

In a possible example, before S901, the visited application function network element receives an application session establishment request message from the terminal device. The application session establishment request message is used to request to establish communication between the terminal device and the visited application function network element, and the application session establishment request message carries the key identifier. In other words, the terminal device requests to communicate with the visited application function network element, and the visited application function network element requests, based on the request of the terminal device, the visited authentication and key management for applications anchor function network element to obtain the root key used to protect the communication data between the visited application function network element and the terminal device.

S902: The visited authentication and key management for applications anchor function network element obtains a verification result of a subscriber permanent identifier of the terminal device.

In a first possible implementation, the visited authentication and key management for applications anchor function network element determines whether the subscriber permanent identifier of the terminal device is received from a visited access and mobility management function network element. When the visited authentication and key management for applications anchor function network element receives the subscriber permanent identifier of the terminal device from the visited access and mobility management function network element, the visited authentication and key management for applications anchor function network element determines that verification on the subscriber permanent identifier succeeds. When the visited authentication and key management for applications anchor function network element receives no subscriber permanent identifier of the terminal device from the visited access and mobility management function network element, the visited authentication and key management for applications anchor function network element determines that verification on the subscriber permanent identifier fails.

For example, the visited authentication and key management for applications anchor function network element obtains and stores, in advance, a subscriber permanent identifier on which verification succeeds. A specific manner in which the visited authentication and key management for applications anchor function network element obtains the subscriber permanent identifier on which verification succeeds is not limited in this application. In a possible implementation, the visited authentication and key management for applications anchor function network element may perform the procedure in the method 910, to obtain the subscriber permanent identifier. For details, refer to the procedure in the method 910. Details are not described herein. In this case, after receiving the application key get request message from the visited application function network element, the visited authentication and key management for applications anchor function network element determines whether a local storage stores the subscriber permanent identifier of the terminal device. Optionally, the application key get request message includes the key identifier, and the key identifier corresponds to the subscriber permanent identifier of the terminal device. In addition, the visited authentication and key management for applications anchor function network element obtains and stores, in advance, a correspondence between the subscriber permanent identifier on which verification succeeds (that is, an authentic subscriber permanent identifier of the terminal device) and a key identifier. That the visited authentication and key management for applications anchor function network element determines whether a local storage stores the subscriber permanent identifier of the terminal device may mean that the visited authentication and key management for applications anchor function network element determines whether an authentic subscriber permanent identifier of the terminal device corresponding to the key identifier carried in the application key get request message is locally stored.

In a second possible implementation, the visited authentication and key management for applications anchor function network element requests the visited access and mobility management function network element to verify the subscriber permanent identifier of the terminal device. The visited authentication and key management for applications anchor function network element determines, based on a verification result returned by the visited access and mobility management function network element, whether verification on the subscriber permanent identifier succeeds.

For example, in a possible implementation, after receiving the application key get request message from the visited application function network element, the visited authentication and key management for applications anchor function network element first obtains the subscriber permanent identifier of the terminal device.

For example, the application key get request message includes the key identifier, and the visited authentication and key management for applications anchor function network element pre-obtains a correspondence between the key identifier and the subscriber permanent identifier of the terminal device. After receiving the application key get request message from the visited application function network element, the visited authentication and key management for applications anchor function network element determines the subscriber permanent identifier based on the key identifier in the key get request message and the pre-obtained correspondence between the key identifier and the subscriber permanent identifier.

Specifically, for example, after a primary authentication procedure for the terminal device is successfully completed, an authentication server function network element generates an authentication and key management for applications anchor key and the key identifier corresponding to the authentication and key management for applications anchor key. The authentication server function network element sends the key identifier and the subscriber permanent identifier of the terminal device to the visited authentication and key management for applications anchor function network element. The visited authentication and key management for applications anchor function network element receives and stores the correspondence between the key identifier and the subscriber permanent identifier. For another example, after the primary authentication procedure for the terminal device is successfully completed, the authentication server function network element generates an authentication and key management for applications anchor key and the key identifier corresponding to the authentication and key management for applications anchor key. The authentication server function network element sends the authentication and key management for applications anchor key, the key identifier, and the subscriber permanent identifier of the terminal device to the visited access and mobility management function network element. The visited access and mobility management function network element sends the key identifier, the subscriber permanent identifier, and the authentication and key management for applications anchor key together to the visited authentication and key management for applications anchor function network element. The visited authentication and key management for applications anchor function network element receives and stores a correspondence between the key identifier, the subscriber permanent identifier, and the authentication and key management for applications anchor key. In this case, the visited authentication and key management for applications anchor function network element obtains the subscriber permanent identifier corresponding to the key identifier from the local storage.

For example, in another possible implementation, the visited authentication and key management for applications anchor function network element obtains the subscriber permanent identifier from a home authentication and key management for applications anchor function network element. For example, the application key get request message includes the key identifier, and the visited authentication and key management for applications anchor function network element requests the root key from the home authentication and key management for applications anchor function network element based on the key identifier. For example, the visited authentication and key management for applications anchor function network element sends an application key get request message to the home authentication and key management for applications anchor function network element, and uses the application key get request message to carry the key identifier. After receiving the application key get request message from the visited authentication and key management for applications anchor function network element, the home authentication and key management for applications anchor function network element searches, based on the key identifier, for an authentication and key management for applications anchor key corresponding to the key identifier, then generates the root key based on the authentication and key management for applications anchor key, and sends, via an application key get response message, the root key and the subscriber permanent identifier corresponding to the root key to the visited authentication and key management for applications anchor function network element. Optionally, the application key get response message may further carry a common public subscriber identifier of the terminal device.

Further, after obtaining the subscriber permanent identifier, the visited authentication and key management for applications anchor function network element obtains the verification result corresponding to the subscriber permanent identifier. The verification result indicates whether verification on the subscriber permanent identifier succeeds.

A specific implementation in which the visited authentication and key management for applications anchor function network element obtains the verification result corresponding to the subscriber permanent identifier is not limited in this application.

In a possible example, the visited authentication and key management for applications anchor function network element obtains the verification result corresponding to the subscriber permanent identifier by using the procedure in the method 920. For a specific process, refer to the procedure in the method 920. Details are not described herein.

In another possible implementation, the visited authentication and key management for applications anchor function network element may verify the subscriber permanent identifier by using a message authentication code from the terminal device. For example, the terminal device may generate a third message authentication code based on the subscriber permanent identifier, the key (optional), and the computing parameter, and then the terminal device sends the third message authentication code and the computing parameter to the visited application function network element. The key may be an authentication and key management for applications anchor key, or a key derived from an authentication and key management for applications anchor key. Then, the visited application function network element sends the third message authentication code and the computing parameter to the visited authentication and key management for applications anchor function network element. In this case, the visited authentication and key management for applications anchor function network element generates the fourth message authentication code based on the subscriber permanent identifier obtained in S922, the authentication and key management for applications anchor key (or the key derived based on the obtained authentication and key management for applications anchor key) obtained from the visited access and mobility management function network element or the home authentication and key management for applications anchor function network element, and the computing parameter obtained from the visited application function network element. When the third message authentication code is the same as the fourth message authentication code, the visited authentication and key management for applications anchor function network element determines that the verification result of the subscriber permanent identifier and the key is "success". When the third message authentication code is different from the fourth message authentication code, the visited authentication and key management for applications anchor function network element determines that the verification result of the subscriber permanent identifier and the key is "failure".

S903: The visited authentication and key management for applications anchor function network element sends the root key to the visited application function network element. Correspondingly, the visited application function network element receives the root key from the visited authentication and key management for applications anchor function network element.

For example, if the visited authentication and key management for applications anchor function network element determines that the local storage stores the subscriber permanent identifier of the terminal device, the visited authentication and key management for applications anchor function network element sends the root key to the visited application function network element, and the visited application function network element may establish a secure connection to the terminal device based on the root key. In other words, the root key is used to protect communication security between the visited application function network element and the terminal device. For example, the visited application function network element and the terminal device generate a communication key based on the root key, and protect communication data between the terminal device and the visited application function network element by using the communication key. A specific process is not limited in this application.

Optionally, before the visited authentication and key management for applications anchor function network element sends the root key to the visited application function network element, the visited authentication and key management for applications anchor function network element obtains the root key.

This step does not occur when the visited authentication and key management for applications anchor function is used only as a storage function.

This step is not performed when the visited authentication and key management for applications anchor function is not only used as a storage function, but also used to obtain KAF. When this step is performed, for example, if the visited authentication and key management for applications anchor function network element finds that the subscriber permanent identifier corresponding to the key identifier is locally stored, the visited authentication and key management for applications anchor function network element obtains the root key.

In a possible implementation, the visited authentication and key management for applications anchor function network element pre-obtains a relationship between the authentication and key management for applications anchor key and the key identifier. The visited authentication and key management for applications anchor function network element determines the authentication and key management for applications anchor key based on the key identifier and the relationship between the authentication and key management for applications anchor key and the key identifier, and then generates the root key based on the authentication and key management for applications anchor key.

For example, after the primary authentication procedure for the terminal device is successfully completed, the authentication server function network element generates the authentication and key management for applications anchor key and the key identifier corresponding to the authentication and key management for applications anchor key, and the authentication server function network element sends the authentication and key management for applications anchor key and the key identifier to the visited authentication and key management for applications anchor function network element. The visited authentication and key management for applications anchor function network element receives and stores a correspondence between the authentication and key management for applications anchor key and the key identifier.

For another example, after the primary authentication procedure for the terminal device is successfully completed, the authentication server function network element generates an authentication and key management for applications anchor key and a key identifier corresponding to the authentication and key management for applications anchor key, and the authentication server function network element sends the authentication and key management for applications anchor key and the key identifier to the visited access and mobility management function network element, the visited access and mobility management function network element sends the key identifier, the subscriber permanent identifier, and the authentication and key management for applications anchor key together to the visited authentication and key management for applications anchor function network element in S913.

In another possible implementation, the visited authentication and key management for applications anchor function network element requests the root key from the home authentication and key management for applications anchor function network element based on the key identifier. For example, the visited authentication and key management for applications anchor function network element sends an application key get request message to the home authentication and key management for applications anchor function network element, and uses the application key get request message to carry the key identifier. After receiving the application key get request message from the visited authentication and key management for applications anchor function network element, the home authentication and key management for applications anchor function network element searches, based on the key identifier, for an authentication and key management for applications anchor key corresponding to the key identifier, then generates the root key based on the authentication and key management for applications anchor key, and sends, via an application key get response message, the root key to the visited authentication and key management for applications anchor function network element.

Optionally, the visited authentication and key management for applications anchor function network element may further verify the received authentication and key management for applications anchor key or root key. For example, the terminal device may generate the first message authentication code based on the second key and the computing parameter. The second key herein is any one of the following: a root key locally generated by the terminal device, an authentication and key management for applications anchor key locally generated by the terminal device (the authentication and key management for applications anchor key is used to generate the root key), and a key derived based on the root key or the authentication and key management for applications anchor key. Then, the terminal device sends the first message authentication code to the visited authentication and key management for applications anchor function network element through the visited application function network element. For example, the terminal device sends the first message authentication code and the computing parameter to the visited application function network element, and then the visited application function network element includes the first message authentication code in S901, and optionally, further includes the computing parameter in S901. After obtaining the first message authentication code and the computing parameter, the visited authentication and key management for applications anchor function network element generates the second message authentication code based on the first key and the computing parameter. The first key is any one of the following: a root key obtained by the visited authentication and key management for applications anchor function network element, an authentication and key management for applications anchor key obtained by the visited authentication and key management for applications anchor function network element, and a key derived based on the root key or the authentication and key management for applications anchor key. It may be understood that the first key and the second key are keys of a same type. In other words, if the second key is a root key locally generated by the terminal device, the first key is a root key obtained by the visited authentication and key management for applications anchor function network element, and so on. It may be further understood that an algorithm used by the terminal device to generate the first message authentication code and a parameter other than the first key are the same as an algorithm used by the visited authentication and key management for applications anchor function network element to generate the second message authentication code and a parameter other than the second key.

Further, the visited authentication and key management for applications anchor function network element determines whether the first message authentication code is the same as the second message authentication code. The visited authentication and key management for applications anchor function network element performs S903 only when the first message authentication code is the same as the second message authentication code.

It may be understood that in the foregoing solution, an example in which the visited authentication and key management for applications anchor function network element verifies the subscriber permanent identifier is used for description. However, this application is not limited thereto. In other words, another network element or device may further verify the subscriber permanent identifier. For example, the visited application function network element may further verify the subscriber permanent identifier. For example, after receiving the application session establishment request message from the terminal device, the visited application function network element determines a corresponding subscriber permanent identifier based on the key identifier carried in the application session establishment request message, and then obtains a verification result of the subscriber permanent identifier. When verification on the permanent identifier of the subscriber succeeds, the visited application function network element sends an application root key get request message to the visited authentication and key management for applications anchor function network element. After receiving the application root key get request message from the visited application function network element, the visited authentication and key management for applications anchor function network element obtains the root key, and sends the root key to the visited application function network element.

Based on the foregoing solution, the visited authentication and key management for applications anchor function network element may send the root key to the visited application function network element when determining that the verification on the subscriber permanent identifier succeeds, so that secure communication can be performed between the visited application function network element and the terminal device. The method can improve service reliability of the terminal device, and reduce service failures between the terminal device and the visited application function network element.

(b) in FIG. 9 is an example flowchart of a method 910 according to an embodiment of this application. The following provides example descriptions of the method 910 with reference to steps in (b) in FIG. 9.

S911: A visited access and mobility management function network element obtains a subscriber permanent identifier. Optionally, the visited access and mobility management function network element obtains a correspondence between a key identifier and a subscriber permanent identifier.

For example, an authentication server function network element or a unified data management function network element sends the subscriber permanent identifier (or the correspondence between the subscriber permanent identifier and the key identifier) to the visited access and mobility management function network element. For example, the authentication server function network element sends the subscriber permanent identifier (or the correspondence between the subscriber permanent identifier and the key identifier) to the visited access and mobility management function network element via a UE authentication response (Nausf_UEAuthentication_Authenticate Response) message. Alternatively, the unified data management function network element sends the subscriber permanent identifier (or the correspondence between the subscriber permanent identifier and the key identifier) to the visited access and mobility management function network element via a register response (Nudm_UECM_RegistrationResponse) message. Alternatively, the authentication server function network element or the unified data management function network element sends the subscriber permanent identifier (or the correspondence between the subscriber permanent identifier and the key identifier) to the visited access and mobility management function network element via another service-oriented request message. A specific message name is not limited in this embodiment.

Optionally, before the authentication server function network element or the unified data management function network element sends the correspondence of the subscriber permanent identifier (or the correspondence between the subscriber permanent identifier and the key identifier) to the visited access and mobility management function network element, the authentication server function network element or the unified data management function network element determines that a terminal device is currently in a roaming state (that is, the terminal device is in a visited network). In other words, the authentication server function network element or the unified data management function network element sends the subscriber permanent identifier (or the correspondence between the subscriber permanent identifier and the key identifier) to the visited access and mobility management function network element only when determining that the terminal device is in the roaming state.

Optionally, in S912, the visited access and mobility management function network element determines that the terminal device corresponding to the subscriber permanent identifier is located in an operator network in which the visited access and mobility management function network element is located.

For example, in a non-access stratum security mode command procedure, after receiving a security mode command complete message from the terminal device, the visited access and mobility management function network element may verify integrity protection of the security mode command complete message. If the verification succeeds, it is determined that the terminal device corresponding to the subscriber permanent identifier is located in the operator network in which the visited access and mobility management function network element is located. This is because a root key of a key used to verify the integrity protection of the security mode command message is generated based on the subscriber permanent identifier of the terminal device. If the verification on the integrity protection of the security mode command message fails, or the visited access and mobility management function network element receives a failure message corresponding to the security mode command message sent by the visited access and mobility management function network element, it indicates that it cannot be determined whether the subscriber permanent identifier is in the operator network in which the visited access and mobility management function network element is located.

It may be understood that, when the visited access and mobility management function network element determines that the terminal device corresponding to the subscriber permanent identifier is located in the operator network in which the visited access and mobility management function network element is located, it indicates that verification on the subscriber permanent identifier succeeds. That is, the subscriber permanent identifier is an authentic identifier of the terminal device that is to communicate with the visited application function network element.

Optionally, the visited access and mobility management function network element stores the subscriber permanent identifier (or the correspondence between the subscriber permanent identifier and the key identifier).

For example, the visited access and mobility management function network element may store the subscriber permanent identifier (or the correspondence between the subscriber permanent identifier and the key identifier) when determining that the terminal device corresponding to the subscriber permanent identifier is indeed located in the operator network in which the visited access and mobility management function network element is located.

In a possible implementation, the visited access and mobility management function network element may store the subscriber permanent identifier (or the correspondence between the subscriber permanent identifier and the key identifier) for a long period of time. For example, the subscriber permanent identifier (or the correspondence between the subscriber permanent identifier and the key identifier) is stored in a context of the terminal device.

In another possible implementation, the visited access and mobility management function network element may store the subscriber permanent identifier (or the correspondence between the subscriber permanent identifier and the key identifier) temporarily. For example, after performing step S914, the visited access and mobility management function network element may locally delete the subscriber permanent identifier (or the correspondence between the subscriber permanent identifier and the key identifier). Optionally, in S913, the visited access and mobility management function network element stores the subscriber permanent identifier (or the correspondence between the subscriber permanent identifier and the key identifier).

S914: The visited access and mobility management function network element sends the subscriber permanent identifier (or the correspondence between the subscriber permanent identifier and the key identifier) to a visited authentication and key management for applications anchor function network element. Correspondingly, the visited authentication and key management for applications anchor function network element receives the subscriber permanent identifier (or the correspondence between the subscriber permanent identifier and the key identifier) from the visited access and mobility management function network element.

For example, after determining that verification on the subscriber permanent identifier succeeds in S904, the visited access and mobility management function network element sends the subscriber permanent identifier (or a correspondence between the subscriber permanent identifier and the key identifier) to the visited authentication and key management for applications anchor function network element.

S915: The visited authentication and key management for applications anchor function network element stores the subscriber permanent identifier (or the correspondence between the subscriber permanent identifier and the key identifier).

For example, after receiving the subscriber permanent identifier (or the correspondence between the subscriber permanent identifier and the key identifier) from the visited access and mobility management function network element, the visited authentication and key management for applications anchor function network element stores the subscriber permanent identifier (or the correspondence between the subscriber permanent identifier and the key identifier). Based on the foregoing solution, the visited authentication and key management for applications anchor function network element obtains and stores the subscriber permanent identifier on which verification succeeds. It may be understood that the method 910 may be implemented separately, or may be implemented in combination with the method 900. For example, the method 910 may be performed before the method 900.

(c) in FIG. 9 is an example flowchart of a method 920 according to an embodiment of this application. The following provides example descriptions of the method 920 with reference to steps in (c) in FIG. 9.

S921: A visited authentication and key management for applications anchor function network element obtains a correspondence between a key identifier and a subscriber permanent identifier.

For example, the visited authentication and key management for applications anchor function network element receives a subscriber permanent identifier from a home authentication and key management for applications anchor function network element. Optionally, the visited authentication and key management for applications anchor function network element further receives an authentication and key management for applications anchor key from the home authentication and key management for applications anchor function network element. Optionally, the visited authentication and key management for applications anchor function network element receives the key identifier from the home authentication and key management for applications anchor function network element or a visited application function network element.

S922: The visited authentication and key management for applications anchor function network element sends a verification request message to a visited access and mobility management function network element. Correspondingly, the visited access and mobility management function network element receives the verification request message from the visited authentication and key management for applications anchor function network element.

For example, after obtaining the subscriber permanent identifier, the visited authentication and key management for applications anchor function network element sends the verification request message to the visited access and mobility management function network element, and uses the verification request message to carry the subscriber permanent identifier. Optionally, a key identifier corresponding to the authentication and key management for applications anchor key is also carried.

S923: The visited access and mobility management function network element verifies the subscriber permanent identifier.

For example, after receiving the verification request message, the visited access and mobility management function network element compares the subscriber permanent identifier with a stored subscriber permanent identifier, to verify the subscriber permanent identifier. If the verification request message further carries the key identifier, the visited access and mobility management function network element compares the received subscriber permanent identifier and key identifier with a stored correspondence between a key identifier and a subscriber permanent identifier, to verify the subscriber permanent identifier.

It may be understood that, for a specific solution in which the visited access and mobility management function network element stores the correspondence between the key identifier and the subscriber permanent identifier, refer to the descriptions of S911 to S913 in the method 910. Details are not described herein again.

S924: The visited access and mobility management function network element sends a verification response message to the visited authentication and key management for applications anchor function network element.

For example, after verifying the permanent identifier of the subscriber, the visited access and mobility management function network element returns the verification response message to the visited authentication and key management for applications anchor function network element. The verification response message includes a verification result of the subscriber permanent identifier, and the verification result indicates whether verification on the subscriber permanent identifier succeeds.

With reference to the embodiments shown in FIG. 3 to FIG. 5 and FIG. 7 and FIG. 8, FIG. 10 is an example flowchart of a method 1000 according to an embodiment of this application. The following provides example descriptions of the method 1000 with reference to steps in FIG. 10.

It may be understood that S1001 to S1005 are similar to S301 to S305 in the method 300. For brevity, details are not described herein again.

Optionally, in S 1006, an AUSF sends an AKMA anchor key register request message to a vAAnF. Correspondingly, the vAAnF receives the AKMA anchor key register request message from the AUSF.

Optionally, in S1007, the vAAnF sends an AKMA anchor key register response message to the AUSF. Correspondingly, the AUSF receives the AKMA anchor key register response message from the vAAnF.

S1006 and S1007 are similar to S706 and S707 in the method 700. For brevity, details are not described herein again.

Optionally, in S1008, the vAAnF stores an A-KID and K_{AKMA}.

For example, after receiving the AKMA anchor key register request message from the AUSF, the vAAnF stores the A-KID and K_{AKMA}.

S1009: The AUSF sends an SUPI to a vAMF. Correspondingly, the vAMF receives the SUPI from the AUSF.

For example, after a primary authentication procedure for UE is completed, the AUSF sends the SUPI of the UE to the vAMF. For example, the AUSF sends the SUPI via an authentication response (Nausf_UEAuthentication_Authenticate Response message). Optionally, the AUSF may further send the A-KID to the vAMF, and the A-KID corresponds to the SUPI. In other words, the AUSF may send a correspondence between the SUPI and the A-KID to the vAMF. Optionally, the authentication response message further carries an authentication result, for example, EAP-success (EAP-Success) or 5G-AKA authentication success indication information. A name of the message and content carried in the message are not specifically limited in this embodiment.

Optionally, the AUSF may further send one or more of the following to the vAMF: K_{AKMA}, AKMA subscription data, and an AKMA authorization result. It may be understood that the AKMA subscription data and the AKMA authorization result may be further sent to the vAMF in a vAMF registration procedure. This is not limited in this application.

S1010: The vAMF verifies the SUPI.

In a possible implementation, the vAMF verifies the SUPI through a NAS SMC procedure. Optionally, a NAS SMC message carries the A-KID, or a NAS SMP message carries the A-KID. After receiving the SUPI from the AUSF, the vAMF initiates a NAS SMC procedure by using a NAS key corresponding to a root key generated based on the SUPI. A specific process is not limited in this application. If the NAS SMC procedure succeeds, it indicates that the verification on the SUPI succeeds. That is, it indicates that the SUPI is authentic, or it indicates that the UE corresponding to the SUPI is located in an operator network in which the vAMF is located.

In this case, this step may occur before step S1009.

In another possible implementation, the vAMF proves, by storing a context corresponding to the SUPI, that the SUPI is authentic. This is because the AMF and the UE have interacted through the NAS SMC procedure before this procedure, and the SUPI authenticity has been verified.

S1011: The vAMF sends the SUPI to the vAAnF. Correspondingly, the vAAnF receives the SUPI from the vAMF. Optionally, the vAMF further sends the AKMA subscription data and the AKMA authorization result to the vAAnF.

For example, after the verification on the SUPI succeeds, the vAMF sends, to the vAAnF, the SUPI received from the AUSF. Optionally, if the vAMF further receives the A-KID from the AUSF, the vAMF sends the correspondence between the SUPI and the vAMF to the vAAnF. If the vAMF further receives K_{AKMA} from the AUSF, the vMAF sends K_{AKMA} to the vAAnF.

If the verification on the SUPI fails, the vAMF does not send, to the vAAnF, the SUPI received from the AUSF.

Optionally, before performing step S1011, the vAMF determines whether the UE has permission to use an AKMA service. Specifically, it is determined, based on the AKMA subscription data, that the UE has permission to use the AKMA service, or it is determined, based on the AKMA authorization result, whether the UE has permission to use the AKMA service. When the UE has permission to use the AKMA service, S1011 is performed.

S1012: The vAAnF stores the SUPI.

For example, if the vAAnF receives the SUPI from the vAMF, the vAAnF stores the SUPI. Optionally, if the vAAnF further receives the A-KID from the vAMF, the vAAnF stores the correspondence between the A-KID and the SUPI.

Optionally, if the vAAnF further receives K_{AKMA} from the vAMF, the vAAnF stores a correspondence between the A-KID, the SUPI, and K_{AKMA}.

Optionally, if the vAAnF further receives the AKMA subscription data and/or the AKMA authorization result from the vAMF, the vAAnF further stores the AKMA subscription data and/or the AKMA authorization result.

Based on the foregoing solution, the vAAnF obtains and stores the SUPI on which verification succeeds. Further, optionally, if the UE initiates an application session establishment procedure to the vAMF, a vAF may request to obtain K_{AF} from the vAAnF. The vAAnF may return K_{AF} to the vAF only when it is determined that the vAAnF stores the SUPI. The following provides example descriptions with reference to S1013 to S1020. However, it may be understood that S1001 to S1012 may be independently implemented, or may be implemented in combination with subsequent S1013 to S1020. This is not limited in this application.

S1013: The UE sends an application session establishment request message to the vAF. Correspondingly, the AF receives the application session establishment request message from the UE.

S1014: The vAF sends an application key get request message to the vAAnF. Correspondingly, the vAAnF receives the application key get request message from the vAF.

S1013 and S1014 are similar to S708 and S709 in the method 700. For brevity, details are not described herein again.

S1015: The vAAnF determines whether the vAAnF stores the SUPI of the UE.

For example, after receiving the application key get request message from the vAF, the vAAnF determines whether a local storage stores the SUPI of the UE.

Optionally, in a possible implementation, the vAAnF stores the correspondence between the A-KID and the SUPI in S1012. After receiving the application key get request message from the vAF in S1014, the vAAnF determines, based on an A-KID carried in the application key get request message and the locally stored correspondence between the A-KID and the SUPI, that the SUPI of the UE is locally stored.

If the vAAnF locally stores the SUPI of the UE, it indicates that the SUPI is authentic, or the UE corresponding to the SUPI belongs to the operator network of the vAMF. In this case, the vAAnF continues to perform a subsequent procedure.

Optionally, when the vAAnF stores the AKMA subscription data or the AKMA authorization result, the vAAnF needs to check and determine whether the UE has permission to use the AKMA service. If the vAAnF does not find the AKMA subscription data or the AKMA authorization result, it indicates that the UE does not have permission to use the AKMA service, and the vAAnF terminates the procedure. If the vAAnF can find the AKMA subscription data corresponding to the SUPI, the vAAnF determines, based on the AKMA subscription data, that the UE has permission to use the AKMA service. If the vAAnF can find the AKMA authorization result corresponding to the SUPI, the vAAnF determines, based on the AKMA authorization result, whether the UE has permission to use the AKMA service.

If the vAAnF does not locally store the SUPI corresponding to the A-KID, it indicates that the SUPI previously sent by the AUSF to the vAAnF by using the vAMF is not authentic, or it indicates that the AUSF does not send the SUPI to the vAAnF through the vAMF in advance. The AUSF is unauthentic. In this case, the vAAnF terminates the current procedure. For example, the vAAnF sends a reject message to the vAF, to reject the application key get request message from the vAF.

Further, if the vAAnF stores K_{AKMA} corresponding to the A-KID (for example, K_{AKMA} is stored in S1008, or K_{AKMA} is stored in S1012), the vAAnF derives K_{AF} based on K_{AKMA}, determines a lifetime of K_{AF}, and then performs S1019 and S1020.

If the vAAnF does not store K_{AKMA} corresponding to the A-KID, the vAAnF performs S1016 to S1018.

It may be understood that S1016 to S1018 are similar to S808 to S810 in the method 800. For brevity, details are not described herein again.

Optionally, if an identifier of the UE carried by an hAAnF in an application key get response message is a GPSI, the vAAnF stores the GPSI together with the previously stored A-KID and SUPI. If the identifier of the UE carried by the hAAnF in the application key get response message is an SUPI, the vAAnF may compare the SUPI carried in the application key get response message with a locally stored SUPI. If the SUPI carried in the application key get response message is consistent with the locally stored SUPI, the verification succeeds, and a subsequent procedure continues to be performed.

Optionally, in another possible implementation, S1015 may be further performed after S1018. In this implementation, after receiving the application key get request message from the vAF, the vAAnF first obtains K_{AF} from the hAAnF through the procedure in S1016 to S1018, and then determines whether the local storage stores the SUPI corresponding to the A-KID. If the local storage stores the SUPI corresponding to the A-KID, the vAAnF further determines whether the SUPI carried in the application key get response message is consistent with the SUPI in the local storage. If the SUPI carried in the application key get response message is consistent with the SUPI in the local storage, the vAAnF continues to perform a subsequent procedure.

S1019: The vAAnF sends an application key get response message to the vAF, where the application key get response message carries K_{AF} and the lifetime of K_{AF}. Correspondingly, the vAF receives the application key get response message from the vAAnF.

S1020: The vAF sends an application session establishment response message to the UE. Correspondingly, the UE receives the application session establishment response message from the vAF.

S1019 and S1020 are similar to S711 and S712 in the method 700. For brevity, details are not described herein again.

Based on the foregoing solution, the vAMF may send the SUPI on which verification succeeds to the vAAnF. When determining that the vAAnF locally stores the SUPI, the vAAnF may determine that the verification on the SUPI succeeds. In this case, the vAAnF can send the root key to the vAF, so that the vAF can securely communicate with the UE corresponding to the SUPI. The method can improve service reliability of the UE, and reduce service failures between the UE and the vAF.

With reference to the embodiments shown in FIG. 3 to FIG. 5 and FIG. 7 and FIG. 8, FIG. 11 is an example flowchart of a method 1100 according to an embodiment of this application. The following provides example descriptions of the method 1100 with reference to steps in FIG. 11.

It may be understood that S1101 to S1105 are similar to S301 to S305 in the method 300. For brevity, details are not described herein again.

Optionally, in S1106, an AUSF sends an AKMA anchor key register request message to a vAAnF. Correspondingly, the vAAnF receives the AKMA anchor key register request message from the AUSF.

Optionally, in S1107, the vAAnF sends an AKMA anchor key register response message to the AUSF. Correspondingly, the AUSF receives the AKMA anchor key register response message from the vAAnF.

S1106 and S1107 are similar to S706 and S707 in the method 700, and a difference lies in that the AUSF may include the SUPI in S1106. For brevity, details are not described herein again.

Optionally, in S1108, the vAAnF stores an A-KID and K_{AKMA}.

For example, after receiving the AKMA anchor key register request message from the AUSF, the vAAnF stores the A-KID and K_{AKMA}. Optionally, if the AKMA anchor key register request message in S1106 further carries the SUPI, the vAAnF stores a correspondence between the A-KID, K_{AKMA}, and the SUPI.

Optionally, in S1109, the AUSF sends the SUPI to a vAMF. Correspondingly, the vAMF receives the SUPI from the AUSF. Optionally, the AUSF further sends the A-KID to the vAMF. That is, the AUSF sends a correspondence between the A-KID and the SUPI to the vAMF.

S1110: The vAMF sends the SUPI to the vAAnF. Correspondingly, the vAAnF receives the SUPI from the vAMF. Optionally, if the vAMF further receives the A-KID from the AUSF, the vAMF further sends the A-KID to the vAAnF. That is, the vAMF sends the correspondence between the A-KID and the SUPI to the vAAnF.

For example, if neither of S1106 and S1107 is performed, or if the AUSF does not include the SUPI in S1106, the AUSF may send the SUPI (optionally, the A-KID) to the vAAnF in S1109 and S1110. For example, the AUSF sends the SUPI to the vAMF after a primary authentication procedure, and then the vAMF sends the SUPI to the vAAnF. Optionally, the AUSF may further send K_{AKMA} to the vAMF. If the vAMF receives K_{AKMA} from the hAAnF, the vAMF sends K_{AKMA} to the vAAnF.

Optionally, in S1111, the vAAnF stores the SUPI.

For example, after receiving the SUPI from the AUSF, the vAAnF stores the SUPI. Optionally, if the vAAnF further receives the A-KID from the AUSF, the vAAnF stores the correspondence between the A-KID and the SUPI.

Optionally, if the vAAnF further receives K_{AKMA} from the AUSF, the vAAnF stores the correspondence between the A-KID, the SUPI, and K_{AKMA}.

S1112: UE sends an application session establishment request message to a vAF. Correspondingly, the AF receives the application session establishment request message from the UE.

S1113: The vAF sends an application key get request message to the vAAnF. Correspondingly, the vAAnF receives the application key get request message from the vAF.

S1112 and S1113 are similar to S708 and S709 in the method 700. For brevity, details are not described herein again.

S1114: The vAAnF determines the SUPI of the UE.

For example, after receiving the application key get request message from the vAF, the vAAnF determines the SUPI of the UE.

In a possible implementation, the AUSF performs S1106 and S1107, and the SUPI is carried in S1106. The vAAnF stores the correspondence between the A-KID, K_{AKMA}, and the SUPI in S1108. The vAAnF may determine the SUPI corresponding to the A-KID in a local storage.

In another implementation, the AUSF performs S1109 and S1110, and the vAAnF stores the correspondence between the A-KID and the SUPI in S1111. The vAAnF may determine the SUPI corresponding to the A-KID in the local storage.

In still another possible implementation, if the AUSF does not locally store the SUPI corresponding to the A-KID, the AUSF may obtain the SUPI by performing S1115 to S1117. A specific process is similar to S711 and S712 in the method 700. For brevity, details are not described herein again. It may be understood that in the foregoing two possible implementations, when the vAAnF obtains, from the local storage, the SUPI corresponding to the A-KID, S1115 to S1117 may be performed after S1120. This is not limited in this application.

S1118: The vAAnF sends a verification request message to the vAMF. Correspondingly, the vAMF receives the verification request message from the vAAnF.

For example, after determining the SUPI in S1113, the vAAnF sends the verification request message to the vAMF. The verification request message includes the SUPI, and the verification request message is used to request to verify the SUPI. Optionally, the verification request message may further carry the A-KID.

S1119: The vAMF verifies the SUPI.

For example, after receiving the verification request message from the vAAnF, the vAMF verifies the SUPI carried in the verification request message. For example, the vAMF compares the SUPI carried in the verification request message with a locally stored SUPI, to verify the SUPI; or the vAMF compares the SUPI and the A-KID carried in the verification request message with an SUPI and an A-KID that are stored locally, to verify the correspondence between the SUPI and the A-KID.

S1120: The vAMF sends a verification response message to the vAAnF. Correspondingly, the vAAnF receives the verification response message from the vAMF.

For example, after completing the verification on the SUPI, the vAMF sends the verification response message to the vAAnF, and includes a verification result in the verification response message. The verification result indicates whether the verification on the SUPI succeeds.

After receiving the verification response message from the vAMF, the vAAnF obtains the verification result of the SUPI.

If the verification result indicates that the verification on the SUPI fails, the vAAnF ends the current procedure. For example, the vAAnF sends a reject message to the vAF, to reject the application key get request message from the vAF.

If the verification result indicates that the verification on the SUPI succeeds, the vAAnF continues to perform a subsequent procedure.

Further, if the vAAnF stores K_{AKMA} corresponding to the A-KID (for example, K_{AKMA} is stored in S1108, or K_{AKMA} is stored in S1110), the vAAnF derives K_{AF} based on K_{AKMA}, determines a lifetime of K_{AF}, and then performs S1120 and S1121.

If the vAAnF does not store K_{AKMA} corresponding to the A-KID, the vAAnF performs S1117 to S1119.

It may be understood that S1117 to S1119 are similar to S808 to S810 in the method 800. For brevity, details are not described herein again.

S1120 and S1121 are similar to S711 and S712 in the method 700. For brevity, details are not described herein again.

Based on the foregoing solution, after receiving the application key get request message from the vAF, the vAAnF obtains the verification result of the SUPI corresponding to the UE. When the verification on the SUPI succeeds, the vAAnF may send a root key to the vAF, so that the vAF can securely communicate with the UE corresponding to the SUPI. The method can improve service reliability of the UE, and reduce service failures between the UE and the vAF.

With reference to the embodiments shown in FIG. 3 to FIG. 5 and FIG. 7 and FIG. 8, FIG. 12 is an example flowchart of a method 1200 according to an embodiment of this application. The following provides example descriptions of the method 1200 with reference to steps in FIG. 12.

S1201: Perform a primary authentication procedure.

S1202a: UE generates K_{AKMA}#1 based on K_{AUSF}.

S1202b: An AUSF generates K_{AKMA}#1 based on K_{AUSF}.

S1203a: The UE generates an A-KID.

S1203b: The AUSF generates the A-KID.

It may be understood that S1201 to S1203b are similar to S301 to S303b in the method 300, and a difference lies in that in S1202a and S1202b, AKMA root keys generated by the UE and the AUSF are denoted as K_{AKMA}#1.

S1204: The AUSF sends an AKMA anchor key register request message to an AAnF. Correspondingly, the AAnF receives the AKMA anchor key register request message from the AUSF.

For example, the AUSF selects an AAnF, and then sends the AKMA anchor key register request (Naanf_AKMA_AnchorKey_Register Request) message to the selected AAnF. The AKMA anchor key register request message carries an SUPI, the A-KID, and K_{AKMA}#2. K_{AKMA}#2 may be the same as K_{AKMA}#1, or may be different from K_{AKMA}#1 (for example, K_{AKMA}#2 is an AKMA root key derived from K_{AKMA}#1). This is not limited in this application. When K_{AKMA}#2 is different from K_{AKMA}#1, the AUSF generates K_{AKMA}#2, and then performs S1204.

S1205: The AAnF sends an AKMA anchor key register response message to the AUSF. Correspondingly, the AUSF receives the AKMA anchor key register response message from the AAnF.

For example, after receiving the AKMA anchor key register request message from the AUSF, the AAnF returns the AKMA anchor key register response (Naanf_AKMA_AnchorKey_Register Response) message to the AUSF.

S1206: The AUSF sends an AKMA anchor key register request message to a vAAnF, where the AKMA anchor key register request message carries the SUPI, the A-KID, and K_{AKMA}#2. Correspondingly, the vAAnF receives the AKMA anchor key register request message from the AUSF.

S1207: The vAAnF sends an AKMA anchor key register response message to the AUSF. Correspondingly, the AUSF receives the AKMA anchor key register response message from the vAAnF.

S1206 and S1207 are similar to S706 and S707 in the method 700, and a difference lies in that an AKMA root key carried in S1206 is K_{AKMA}#2.

S1208: The vAAnF stores a correspondence between the A-KID, K_{AKMA}#2, and the SUPI.

For example, after receiving the AKMA anchor key register request message from the AUSF, the vAAnF stores the correspondence between the A-KID, K_{AKMA}#2, and the SUPI.

S1209: The UE generates MAC#1 based on K_{AKMA}#2.

For example, when the UE is currently located in a visited network, the UE generates MAC#1 based on K_{AKMA}#2 and a computing parameter #1.

When K_{AKMA}#2 is different from K_{AKMA}#1, the UE generates K_{AKMA}#2 before S1209.

It may be understood that K_{AKMA}#2 is agreed upon by the UE and the AUSF in advance. For example, the UE and the AUSF determine K_{AKMA}#2 according to a standard specification, or the UE and the AUSF determine K_{AKMA}#2 according to a local policy.

The computing parameter #1 herein may include one or more of the following: the SUPI, the A-KID, and a random value NOUNCE#1.

S1210: The UE sends an application session establishment request message to a vAF. Correspondingly, the AF receives the application session establishment request message from the UE.

For example, the UE sends the application session establishment request (Application Session Establishment Request) message to the vAF. The application session establishment request message is used to request to establish communication between the UE and the vAF. The application session establishment request message includes the A-KID, MAC#1, and the computing parameter #1. It may be understood that, if the computing parameter #1 includes the A-KID, the A-KID may not need to be carried repeatedly.

S1211: The vAF sends an application key get request message to the vAAnF. Correspondingly, the vAAnF receives the application key get request message from the vAF.

For example, after receiving the application session establishment request message from the UE, the vAF sends the application key get request (Naanf_AKMA_ApplicationKey_Get_Request) message to the vAAnF. The application key get request message carries the A-KID, an AF_ID, MAC#1, and the computing parameter #1.

S1212: The vAAnF generates MAC#2 based on K_{AKMA}#2 and the computing parameter #1.

For example, after receiving the application key get request message from the vAF, the vAAnF determines K_{AKMA}#2 based on the A-KID carried in the application key get request message and the correspondence that is between the A-KID, K_{AKMA}#2, and the SUPI and that is stored by the vAAnF in S1208, and then generates MAC#2 based on K_{AKMA}#2 and the computing parameter #1 carried in the application key get request message.

It should be noted that a manner in which the vAAnF generates MAC#2 should be the same as a manner in which the UE generates MAC#1. That is, a generation function, a quantity of input parameters, and a parameter other than K_{AKMA}#2 are the same. For example, the UE uses HASH-256 as a generation function in S1209, and the computing parameter #1 includes the SUPI and NOUNCE#1. A generation function used when the vAAnF generates MAC#2 in S1212 is also HASH-256, and the parameter #1 also includes the SUPI and NOUNCE#1.

S1213: The vAAnF derives K_{AF} based on K_{AKMA}#3.

For example, after generating MAC#2, the vAAnF compares MAC#1 with MAC#2. If MAC#1 is the same as MAC#2, it indicates that K_{AKMA}#2 received by the vAAnF in S1206 is the same as K_{AKMA}#2 generated on a UE side, and the vAAnF derives K_{AF} based on K_{AKMA}#3. K_{AKMA}#3 may be the same as K_{AKMA}#2, or may be different from K_{AKMA}#2. For example, K_{AKMA}#3 is derived based on K_{AKMA}#2 and a computing parameter #2. The computing parameter #2 includes, for example, NOUNCE#1 and NOUNCE#2. In addition, the vAAnF determines a lifetime of K_{AF}.

S1214: The vAAnF sends an application key get response message to the vAF. Correspondingly, the vAF receives the application key get response message from the vAAnF.

For example, after generating K_{AF} and the lifetime of K_{AF} in S1213, the vAAnF sends the application key get response (Naanf_AKMA_ApplicationKey_Get Response) to the vAF. The application key get response message carries K_{AF} and the lifetime of K_{AF}. Optionally, if K_{AKMA}#3 is derived based on K_{AKMA}#2 and the computing parameter #2, the vAAnF may further use the application key get response message to carry the computing parameter #2.

S1215: The vAF sends an application session establishment response message to the UE. Correspondingly, the UE receives the application session establishment response message from the vAF.

For example, after receiving the application key get response message from the vAAnF, and obtaining K_{AF} and the lifetime of K_{AF} from the application key get response message, the vAF returns the application session establishment response (Application Session Establishment Response) message to the UE. Optionally, if the vAF receives the computing parameter #2 in S1214, the vAF uses the application session establishment response message to carry the computing parameter #2.

Correspondingly, after receiving the application session response message from the vAF, the UE generates K_{AF}. Optionally, if the UE receives the computing parameter #2 in S1215, the UE generates K_{AF} based on the computing parameter #2.

Based on the foregoing solution, the vAAnF may verify K_{AKMA}#2 by using MAC, to ensure that K_{AKMA}#2 used by the UE is the same as K_{AKMA}#2 obtained by the vAAnF, to reduce service failures of the UE and improve service performance of the UE.

With reference to the embodiments shown in FIG. 3 to FIG. 5 and FIG. 7 and FIG. 8, FIG. 13 is an example flowchart of a method 1300 according to an embodiment of this application. The following provides example descriptions of the method 1300 with reference to steps in FIG. 13.

S1301: Perform a primary authentication procedure.

S1302a: UE generates K_{AKMA}#1 based on K_{AUSF}.

S1302b: An AUSF generates K_{AKMA}#1 based on K_{AUSF}.

S1303a: The UE generates an A-KID.

S1303b: The AUSF generates the A-KID.

It may be understood that S1301 to S1303b are similar to S301 to S303b in the method 300, and a difference lies in that in S1302a and S1302b, AKMA root keys generated by the UE and the AUSF are denoted as K_{AKMA}#1.

S1304: The AUSF sends an AKMA anchor key register request message to an AAnF. Correspondingly, the AAnF receives the AKMA anchor key register request message from the AUSF.

S1305: The AAnF sends an AKMA anchor key register response message to the AUSF. Correspondingly, the AUSF receives the AKMA anchor key register response message from the AAnF.

S1304 and S1305 are similar to S1204 and S1205 in the method 1200. For brevity, details are not described herein again.

S1306: The UE generates MAC#1 based on K_{AF}.

For example, when the UE is currently located in a visited network, the UE generates K_{AF} based on K_{AKMA}#2, and then the UE generates MAC#1 based on K_{AF} and a computing parameter #1.

S1307: The UE sends an application session establishment request message to a vAF. Correspondingly, the AF receives the application session establishment request message from the UE.

S1308: The vAF sends an application key get request message to a vAAnF. Correspondingly, the vAAnF receives the application key get request message from the vAF.

S1307 and S1308 are similar to S1210 and S1211 in the method 1200. For brevity, details are not described herein again.

S1309: The vAAnF stores MAC#1.

For example, after receiving the application key get request message from the vAF, the vAAnF stores MAC#1.

S1310: The vAAnF sends the application key get request message to the hAAnF. Correspondingly, the hAAnF receives the application key get request message from the UE.

For example, the vAAnF sends the application key get request message to the hAAnF. The application key get request message is used to request to obtain K_{AF}. The application key get request message includes the A-KID and an AF ID. Optionally, the application key get request message further includes indication information, and the indication information indicates that the vAAnF requests to obtain an SUPI of the UE.

S1311: The hAAnF derives K_{AF} based on K_{AKMA}#2.

For example, after receiving the application key get request message from the vAAnF, the hAAnF locally searches, based on the A-KID carried in the application key get request message, for K_{AKMA}#2 corresponding to the A-KID, derives K_{AF} based on K_{AKMA}#2, and determines a lifetime of K_{AF}.

S1312: The hAAnF sends an application key get response message to the vAAnF. Correspondingly, the vAAnF receives the application key get response message from the hAAnF.

For example, after generating K_{AF} and the lifetime of K_{AF} in S1311, the hAAnF sends K_{AF} and the lifetime of K_{AF} to the vAAnF via the application key get response message. Optionally, the hAAnF may further send the SUPI to the vAAnF based on the indication information or according to S1310 from the vAAnF.

S1313: The vAAnF generates MAC#2 based on K_{AF} and the computing parameter #1.

For example, after receiving the application key get response message from the hAAnF, the vAAnF obtains K_{AF} from the application key get response message, and then generates MAC#2 based on K_{AF} and the computing parameter #1. It may be understood that a manner in which the vAAnF generates MAC#2 should be the same as a manner in which the UE generates MAC#1.

S1314: The vAAnF sends an application key get response message to the vAF. Correspondingly, the vAF receives the application key get response message from the vAAnF.

For example, after generating MAC#2, the vAAnF compares MAC#1 with MAC#2. If MAC#1 is the same as MAC#2, it indicates that K_{AF} received by the vAAnF in S1312 is the same as K_{AF} generated on a UE side. In this case, the vAAnF sends the application key get response message to the vAF, and uses the application key get response message to carry K_{AF} and the lifetime of K_{AF}.

S1315: The vAF sends an application session establishment response message to the UE. Correspondingly, the UE receives the application session establishment response message from the vAF.

Based on the foregoing solution, the vAAnF may verify K_{AF} by using MAC, to ensure that K_{AF} used by the UE is the same as K_{AF} obtained by the vAAnF, to reduce service failures of the UE and improve service performance of the UE.

With reference to the embodiments shown in FIG. 3 to FIG. 5 and FIG. 7 and FIG. 8, FIG. 14 is an example flowchart of a method 1400 according to an embodiment of this application. The following provides example descriptions of the method 1400 with reference to steps in FIG. 14.

It may be understood that S1401 to S1403b are similar to S301 to S303b in the method 300, and a difference lies in that in S1402a and S1402b, AKMA root keys generated by the UE and the AUSF are denoted as K_{AKMA}#1. S1404 and S1405 are similar to S1204 and S1205 in the method 1200. For brevity, details are not described herein again.

S1406: The UE generates MAC#1 based on K_{AKMA}#2.

S1406 is similar to S1209 in the method 1200, and details are not described herein again.

S1406: The UE generates MAC#1 based on K_{AF}.

S1407: The UE sends an application session establishment request message to a vAF. Correspondingly, the AF receives the application session establishment request message from the UE.

S1408: The vAF sends an application key get request message to a vAAnF. Correspondingly, the vAAnF receives the application key get request message from the vAF.

S1409: The vAAnF stores MAC#1.

S1407 to S1409 are similar to S1306 to S1309 in the method 1300, and details are not described herein again.

S1410: The UE sends the application key get request message to an hAAnF. Correspondingly, the hAAnF receives the application key get request message from the UE.

For example, the vAAnF sends the application key get request message to the hAAnF. The application key get request message is used to request to obtain K_{AKMA}#2. The application key get request message includes an A-KID and an AF ID.

S1411: The hAAnF sends an application key get response message to the vAAnF. Correspondingly, the vAAnF receives the application key get response message from the hAAnF.

For example, the hAAnF obtains K_{AKMA}#2 based on the A-KID, and sends K_{AKMA}#2 to the vAAnF via an application key get response message.

S1412: The vAAnF generates MAC#2 based on K_{AF} and a computing parameter #1.

S1413: The vAAnF derives K_{AF} based on K_{AKMA}#3.

S1412 and S1413 are similar to S1212 and S1213 in the method 1200, and details are not described herein again.

S1414: The vAAnF sends the application key get response message to the vAF, where the application key get response message includes K_{AF} and a lifetime of K_{AF}. Correspondingly, the vAF receives the application key get response message from the vAAnF.

S1415: The vAF sends an application session establishment response message to the UE. Correspondingly, the UE receives the application session establishment response message from the vAF.

S1414 and S1415 are similar to S1214 and S1215 in the method 1200. For brevity, details are not described herein again.

Based on the foregoing solution, the vAAnF may verify K_{AKMA}#2 by using MAC, to ensure that K_{AKMA}#2 used by the UE is the same as K_{AKMA}#2 obtained by the vAAnF, to reduce service failures of the UE and improve service performance of the UE.

Corresponding to the methods provided in the foregoing method embodiments, an embodiment of this application further provides a corresponding apparatus. The apparatus includes a corresponding module configured to perform the foregoing method embodiments. The modules may be software, hardware, or a combination of software and hardware. It may be understood that technical features described in the foregoing method embodiments are also applicable to the following apparatus embodiments. Therefore, for content that is not described in detail, refer to the foregoing method embodiments. For brevity, details are not described herein again.

FIG. 15 is a block diagram of a communication apparatus 10 according to an embodiment of this application. The apparatus 10 includes a transceiver module 11 and a processing module 12. The transceiver module 11 may implement a corresponding communication function. The processing module 12 is configured to perform data processing. In other words, the transceiver module 11 is configured to perform a sending/receiving-related operation, and the processing module 12 is configured to perform an operation other than sending and receiving. The transceiver module 11 may also be referred to as a communication interface or a communication unit.

Optionally, the apparatus 10 may further include a storage module 13. The storage module 13 may be configured to store instructions and/or data. The processing module 12 may read the instructions and/or the data in the storage module, so that the apparatus implements an action of a device or a network element in the foregoing method embodiments.

In a first design, the apparatus 10 may correspond to the visited authentication and key management for applications anchor function network element (for example, the visited authentication and key management for applications anchor function network element in the method 900, the method 910, or the method 920, or the vAAnF in the method 1000 to the method 1400) in the foregoing method embodiments, or may be a component (for example, a chip) of the visited authentication and key management for applications anchor function network element.

The apparatus 10 may implement steps or procedures performed by the visited authentication and key management for applications anchor function network element in the foregoing method embodiments. The transceiver module 11 may be configured to perform sending and receiving related operations of the visited authentication and key management for applications anchor function network element in the foregoing method embodiments. The processing module 12 may be configured to perform processing related operations of the visited authentication and key management for applications anchor function network element in the foregoing method embodiments.

In a possible implementation, the transceiver module 11 is configured to receive an application key get request message from a visited application function network element, where the application key get request message is used to request to obtain a root key, and the root key is used to protect communication data between the visited application function network element and a terminal device. The processing module 12 is configured to obtain a verification result of a subscriber permanent identifier of the terminal device. The transceiver module 11 is configured to: when the verification result indicates that verification on the subscriber permanent identifier succeeds, send the root key to the visited application function network element.

In a second design, the apparatus 10 may correspond to the visited access and mobility management function network element (for example, the visited access and mobility management function network element in the method 900, the method 910, or the method 920, or the vAMF in the method 600 to the method 1000) in the foregoing method embodiments, or a component (for example, a chip) of the visited access and mobility management function network element.

The apparatus 10 may implement steps or procedures corresponding to the visited access and mobility management function network element in the foregoing method embodiments. The transceiver module 11 may be configured to perform receiving and sending related operations of the visited access and mobility management function network element in the foregoing method embodiments. The processing module 12 may be configured to perform processing related operations of the visited access and mobility management function network element in the foregoing method embodiments.

In a possible implementation, the transceiver module 11 receives a subscriber permanent identifier from an authentication server function network element. The processing module 12 is configured to store the subscriber permanent identifier when it is determined that a terminal device corresponding to the subscriber permanent identifier is located in an operator network in which the visited access and mobility management function network element is located.

It should be understood that a specific process in which the modules perform the foregoing corresponding steps is described in detail in the foregoing method embodiments. For brevity, details are not described herein.

It should be further understood that the apparatus 10 herein is embodied in a form of a functional module. The term "module" herein may be an application-specific integrated circuit (application-specific integrated circuit, ASIC), an electronic circuit, a processor (such as a shared processor, a dedicated processor, or a group processor) configured to execute one or more software or firmware programs, a memory, a combinational logic circuit, and/or another suitable component that supports the described function. In an optional example, a person skilled in the art may understand that the apparatus 10 may be specifically the visited authentication and key management for applications anchor function network element in the foregoing embodiments, and may be configured to perform procedures and/or steps corresponding to the visited authentication and key management for applications anchor function network element in the foregoing method embodiments. Alternatively, the apparatus 10 may be specifically the visited access and mobility management function network element in the foregoing embodiments, and may be configured to perform procedures and/or steps corresponding to the visited access and mobility management function network element in the foregoing method embodiments. Alternatively, the apparatus 10 may be specifically the mobility management network element in the foregoing embodiments, and may be configured to perform procedures and/or steps corresponding to the mobility management network element in the foregoing method embodiments. To avoid repetition, details are not described herein again.

The apparatus 10 in each of the foregoing solutions has a function of implementing a corresponding step performed by a device (for example, the visited authentication and key management for applications anchor function network element, the visited access and mobility management function network element, or the visited mobility management network element) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to separately perform a receiving and sending operation and a related processing operation in each method embodiment.

In addition, the transceiver module 11 may be a transceiver circuit (for example, may include a receiver circuit and a transmitter circuit), and the processing module may be a processing circuit.

FIG. 16 is a diagram of another communication apparatus 20 according to an embodiment of this application. The apparatus 20 includes a processor 21. The processor 21 is configured to execute a computer program or instructions stored in a memory 22, or read data/signaling stored in the memory 22, to perform the methods in the foregoing method embodiments. Optionally, there are one or more processors 21.

Optionally, as shown in FIG. 16, the apparatus 20 further includes the memory 22. The memory 22 is configured to store the computer program or the instructions and/or the data. The memory 22 may be integrated with the processor 21, or may be disposed separately. Optionally, there are one or more memories 22.

Optionally, as shown in FIG. 16, the apparatus 20 further includes a transceiver 23. The transceiver 23 is configured to receive and/or send a signal. For example, the processor 21 is configured to control the transceiver 23 to send and/or receive a signal.

In a solution, the apparatus 20 is configured to implement an operation performed by the visited authentication and key management for applications anchor function network element in the foregoing method embodiments.

In another solution, the apparatus 20 is configured to implement an operation performed by the visited access and mobility management function network element in the foregoing method embodiments.

In still another solution, the apparatus 20 is configured to implement operations performed by the visited mobility management network element in the foregoing method embodiments.

It should be understood that, the processor mentioned in embodiments of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described herein is intended to include, but is not limited to, these and any other appropriate type of memory.

FIG. 17 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, so that the chip system 30 can implement the methods and the functions in embodiments of this application. The input/output interface 32 may be an input/output circuit in the chip system 30, and outputs information processed by the chip system 30, or inputs to-be-processed data or signaling information to the chip system 30 for processing.

In another solution, the chip system 30 is configured to implement an operation performed by the visited authentication and key management for applications anchor function network element (for example, the visited authentication and key management for applications anchor function network element in FIG. 9 or the vAAnF in FIG. 10 to FIG. 14) in the foregoing method embodiments.

For example, the logic circuit 31 is configured to implement a processing related operation performed by the visited authentication and key management for applications anchor function network element in the foregoing method embodiments, for example, a processing related operation performed by the visited authentication and key management for applications anchor function network element in the embodiment shown in FIG. 9, or a processing related operation performed by the vAAnF in any one of the embodiments shown in FIG. 10 to FIG. 14. The input/output interface 32 is configured to implement a sending and/or receiving related operation performed by the visited authentication and key management for applications anchor function network element in the foregoing method embodiments, for example, a sending and/or receiving related operation performed by the visited authentication and key management for applications anchor function network element in the embodiment shown in FIG. 9, or a sending and/or receiving related operation performed by the vAAnF in any one of the embodiments shown in FIG. 10 to FIG. 14.

In another solution, the chip system 30 is configured to implement an operation performed by the visited access and mobility management function network element (for example, the visited access and mobility management function network element in FIG. 9 or the vAMF in FIG. 10 to FIG. 14) in the foregoing method embodiments.

For example, the logic circuit 31 is configured to implement a processing related operation performed by the visited access and mobility management function network element in the foregoing method embodiments, for example, a processing related operation performed by the visited access and mobility management function network element in the embodiment shown in FIG. 9, or a processing related operation performed by the VAMF in any one of the embodiments shown in FIG. 10 to FIG. 14. The input/output interface 32 is configured to implement a sending and/or receiving related operation performed by the visited access and mobility management function network element in the foregoing method embodiments, for example, a sending and/or receiving related operation performed by the visited access and mobility management function network element in the embodiment shown in FIG. 9, or a sending and/or receiving related operation performed by the vAMF in any one of the embodiments shown in FIG. 10 to FIG. 14.

An embodiment of this application further provides a computer-readable storage medium. The computer-readable storage medium stores computer instructions used to implement the method performed by the device in the foregoing method embodiments.

For example, when a computer program is executed by a computer, the computer is enabled to implement the method performed by a mobility management network element in the foregoing method embodiments.

For another example, when the computer program is executed by a computer, the computer is enabled to implement the method performed by the visited authentication and key management for applications anchor function network element in the foregoing method embodiments.

An embodiment of this application further provides a computer program product, including instructions. When the instructions are executed by a computer, the method performed by a device (for example, the visited authentication and key management for applications anchor function network element, the visited access and mobility management function network element, or the visited mobility management network element) in the foregoing method embodiments is implemented.

An embodiment of this application further provides a communication system, including the foregoing visited access and mobility management function network element. Optionally, the foregoing visited mobility management network element is further included. Optionally, the visited authentication and key management for applications anchor function network element is further included.

For explanations and beneficial effects of related content in any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a visited authentication and key management for applications anchor function network element, an application key get request message from a visited application function network element, wherein the application key get request message is used to request to obtain a root key, and the root key is used to protect communication data between the visited application function network element and a terminal device;
obtaining, by the visited authentication and key management for applications anchor function network element, a verification result of a subscriber permanent identifier of the terminal device; and
when verification on the subscriber permanent identifier succeeds, sending, by the visited authentication and key management for applications anchor function network element, the root key to the visited application function network element.

2. The method according to claim 1, wherein the obtaining, by the visited authentication and key management for applications anchor function network element, a verification result of a subscriber permanent identifier of the terminal device comprises:
when the visited authentication and key management for applications anchor function network element receives the subscriber permanent identifier from a visited access and mobility management function network element, determining, by the visited authentication and key management for applications anchor function network element, that the verification on the subscriber permanent identifier succeeds.

3. The method according to claim 1 or 2, wherein the application key get request message comprises a key identifier, and the subscriber permanent identifier is associated with the key identifier.

4. The method according to claim 1, wherein the obtaining, by the visited authentication and key management for applications anchor function network element, a verification result of a subscriber permanent identifier of the terminal device comprises:
sending, by the visited authentication and key management for applications anchor function network element, a verification request message to a visited access and mobility management function network element, wherein the verification request message comprises the subscriber permanent identifier, and the verification request message is used to request to verify the subscriber permanent identifier; and
receiving, by the visited authentication and key management for applications anchor function network element, a verification response message from the visited access and mobility management function network element, wherein the verification response message comprises the verification result of the subscriber permanent identifier.

5. The method according to claim 4, wherein the method further comprises:
obtaining, by the visited authentication and key management for applications anchor function network element, the subscriber permanent identifier of the terminal device.

6. The method according to claim 5, wherein the application key get request message comprises a key identifier, and the obtaining, by the visited authentication and key management for applications anchor function network element, the subscriber permanent identifier of the terminal device comprises:
determining, by the visited authentication and key management for applications anchor function network element, the subscriber permanent identifier corresponding to the key identifier in a local storage.

7. The method according to claim 6, wherein before the obtaining, by the visited authentication and key management for applications anchor function network element, the subscriber permanent identifier of the terminal device, the method further comprises:
receiving, by the visited authentication and key management for applications anchor function network element, an association relationship between the key identifier and the subscriber permanent identifier from an authentication server function network element; and
storing, by the visited authentication and key management for applications anchor function network element, the association relationship between the key identifier and the subscriber permanent identifier.

8. The method according to claim 5, wherein the application key get request message comprises a key identifier, and the obtaining, by the visited authentication and key management for applications anchor function network element, the subscriber permanent identifier of the terminal device comprises:
sending, by the visited authentication and key management for applications anchor function network element, an application key get request message to an authentication server function network element, wherein the application key get request message comprises the key identifier; and
receiving, by the visited authentication and key management for applications anchor function network element, an application key get response message from the authentication server function network element, wherein the application key get response message comprises the subscriber permanent identifier.

9. The method according to any one of claims 1 to 8, wherein the method further comprises:
receiving, by the visited authentication and key management for applications anchor function network element, an authentication and key management for applications anchor key from the visited access and mobility management function network element; and
generating, by the visited authentication and key management for applications anchor function network element, the root key based on the authentication and key management for applications anchor key.

10. The method according to any one of claims 1 to 9, wherein the method further comprises:
when the verification on the subscriber permanent identifier fails, rejecting, by the visited authentication and key management for applications anchor function network element, the application key get request message.

11. The method according to any one of claims 1 to 10, wherein the application key get request message further comprises a first message authentication code and a computing parameter used to generate the first message authentication code, the first message authentication code is used for verification on a first key, and the first key is any one of the following: the root key, the authentication and key management for applications anchor key used to generate the root key, and a key derived based on the root key or the authentication and key management for applications anchor key; and
the method further comprises:
generating, by the visited authentication and key management for applications anchor function network element, a second message authentication code based on the first key and the computing parameter; and
determining, by the visited authentication and key management for applications anchor function network element, whether the first message authentication code is the same as the second message authentication code; and
the sending, by the visited authentication and key management for applications anchor function network element, the root key to the visited application function network element comprises:
when the first message authentication code is the same as the second message authentication code, sending, by the visited authentication and key management for applications anchor function network element, the root key to the visited application function network element.

12. A communication method, comprising:
receiving, by a visited access and mobility management function network element, a subscriber permanent identifier from an authentication server function network element; and
when determining that a terminal device corresponding to the subscriber permanent identifier is located in an operator network in which the visited access and mobility management function network element is located, indicating, by the visited access and mobility management function network element to a visited authentication and key management for applications anchor function network element, that verification on the subscriber permanent identifier succeeds.

13. The method according to claim 12, wherein the indicating, by the visited access and mobility management function network element to a visited authentication and key management for applications anchor function network element, that verification on the subscriber permanent identifier succeeds comprises:
sending, by the visited access and mobility management function network element, the subscriber permanent identifier to the visited authentication and key management for applications anchor function network element.

14. The method according to claim 12, wherein the indicating, by the visited access and mobility management function network element to a visited authentication and key management for applications anchor function network element, that verification on the subscriber permanent identifier succeeds comprises:
receiving, by the visited access and mobility management function network element, a verification request message from the visited authentication and key management for applications anchor function network element, wherein the verification request message comprises the subscriber permanent identifier, and the verification request message is used to request to verify the subscriber permanent identifier;
determining, by the visited access and mobility management function network element, that the subscriber permanent identifier is locally stored; and
sending, by the visited access and mobility management function network element, a verification response message to the visited authentication and key management for applications anchor function network element, wherein the verification response message comprises a verification result, and the verification result indicates that the verification on the subscriber permanent identifier succeeds.

15. The method according to claim 14, wherein the method further comprises: storing, by the visited access and mobility management function network element, the subscriber permanent identifier.

16. The method according to any one of claims 12 to 15, wherein the method further comprises:
receiving, by the visited access and mobility management function network element, an authentication and key management for applications anchor key from the authentication server function network element; and
sending, by the visited access and mobility management function network element, the authentication and key management for applications anchor key to the visited authentication and key management for applications anchor function network element.

17. A communication method, wherein the method comprises:
receiving, by a visited access and mobility management function network element, a subscriber permanent identifier from an authentication server function network element;
when determining that verification on the subscriber permanent identifier succeeds, sending, by the visited access and mobility management function network element, a verification result to a visited authentication and key management for applications anchor function network element, wherein the verification result indicates that the verification on the subscriber permanent identifier succeeds;
receiving, by the visited authentication and key management for applications anchor function network element, the verification result from the visited access and mobility management function network element;
receiving, by the visited authentication and key management for applications anchor function network element, an application key get request message from a visited application function network element, wherein the application key get request message is used to request to obtain a root key, and the root key is used to protect communication data between the visited application function network element and a terminal device; and
sending, by the visited authentication and key management for applications anchor function network element, the root key to the visited application function network element based on the verification result of the subscriber permanent identifier.

18. The method according to claim 17, wherein before the receiving, by the visited authentication and key management for applications anchor function network element, the verification result from the visited access and mobility management function network element, the method further comprises:
sending, by the visited authentication and key management for applications anchor function network element, a verification request message to the visited access and mobility management function network element, wherein the verification request message comprises the subscriber permanent identifier.

19. The method according to claim 18, wherein the method further comprises:
obtaining, by the visited authentication and key management for applications anchor function network element, the subscriber permanent identifier of the terminal device.

20. The method according to claim 19, wherein the application key get request message comprises a key identifier, and the obtaining, by the visited authentication and key management for applications anchor function network element, the subscriber permanent identifier of the terminal device comprises:
determining, by the visited authentication and key management for applications anchor function network element, the subscriber permanent identifier corresponding to the key identifier in a local storage.

21. The method according to claim 19 or 20, wherein before the obtaining, by the visited authentication and key management for applications anchor function network element, the subscriber permanent identifier of the terminal device, the method further comprises:
receiving, by the visited authentication and key management for applications anchor function network element, an association relationship between the key identifier and the subscriber permanent identifier from the authentication server function network element; and
storing, by the visited authentication and key management for applications anchor function network element, the association relationship between the key identifier and the subscriber permanent identifier.

22. The method according to claim 19, wherein the application key get request message comprises a key identifier, and the obtaining, by the visited authentication and key management for applications anchor function network element, the subscriber permanent identifier of the terminal device comprises:
sending, by the visited authentication and key management for applications anchor function network element, an application key get request message to the authentication server function network element, wherein the application key get request message comprises the key identifier; and
receiving, by the visited authentication and key management for applications anchor function network element, an application key get response message from the authentication server function network element, wherein the application key get response message comprises the subscriber permanent identifier.

23. A communication apparatus, wherein the apparatus comprises one or more functional modules, and the one or more functional modules are configured to perform the method according to any one of claims 1 to 11, or configured to perform the method according to any one of claims 12 to 16.

24. A communication apparatus, comprising:
a processor, configured to execute a computer program stored in a memory, so that the apparatus performs the method according to any one of claims 1 to 11, or the apparatus performs the method according to any one of claims 12 to 16.

25. A computer program product, wherein the computer program product comprises instructions used to perform the method according to any one of claims 1 to 11, or the computer program product comprises instructions used to perform the method according to any one of claims 12 to 16.

26. A computer-readable storage medium, wherein the computer-readable storage medium stores a computer program; and when the computer program is run on a computer, the computer performs the method according to any one of claims 1 to 11, or the computer performs the method according to any one of claims 12 to 16.
